(19) Europäisches Patentamt
European Patent Office
Office européen des brevets

(11) **EP 2 003 146 B1**

(12) **EUROPEAN PATENT SPECIFICATION**

(45) Date of publication and mention
of the grant of the patent:
**26.12.2012   Bulletin 2012/52**

(51) Int Cl.:
*C08C 19/44* (2006.01)          *C08L 21/00* (2006.01)
*A43B 1/10* (2006.01)          *B60C 1/00* (2006.01)
*C08L 15/00* (2006.01)

(21) Application number: **07740204.8**

(22) Date of filing: **29.03.2007**

(86) International application number:
**PCT/JP2007/056766**

(87) International publication number:
**WO 2007/114203 (11.10.2007 Gazette 2007/41)**

(54) **USE OF A CONJUGATED DIENE RUBBER FOR A TIRE**

VERWENDUNG EINES KONJUGIERTEN DIENKAUTSCHUKS FÜR EINEN REIFEN

USAGE DE CAOUTCHOUC DE DIENE CONJUGUE POUR UN PNEU

(84) Designated Contracting States:
**DE FR GB IT**

(30) Priority: **31.03.2006   JP 2006099822**
**07.02.2007   JP 2007027442**

(43) Date of publication of application:
**17.12.2008   Bulletin 2008/51**

(73) Proprietor: **Zeon Corporation**
**Chiyoda-ku**
**Tokyo 100-8246 (JP)**

(72) Inventors:
• **KARATO, Takeshi**
**Tokyo 1008246 (JP)**
• **SASAJIMA, Tatsuo**
**Tokyo 1008246 (JP)**

• **ITO, Kazuya c/o ZEON CORPORATION**
**Tokyo 1008246 (JP)**

(74) Representative: **Beckmann, Claus**
**Kraus & Weisert**
**Patent- und Rechtsanwälte**
**Thomas-Wimmer-Ring 15**
**80539 München (DE)**

(56) References cited:
**EP-A- 0 653 452          EP-A- 1 221 460**
**EP-A- 1 457 501          CN-A- 1 569 912**
**JP-A- 11 349 632          JP-A- 48 054 188**
**JP-A- 60 179 412          JP-A- 2000 505 483**
**JP-A- 2002 212 227          US-A- 3 840 616**
**US-A- 5 369 175          US-A- 5 777 039**
**US-A1- 2003 100 683**

**Description**

TECHNICAL FIELD

The present invention relates to the use of a conjugated diene rubber for manufacturing tires or soles, and a tire or sole; and more precisely, it relates to the use of a conjugated diene rubber excellent in mechanical strength, abrasion resistance and reduced heat build-up, produced by a method for producing the conjugated diene rubber that uses a specific coupling agent.

BACKGROUND ART

Recently, energy saving and environmental measures have been regarded as important, and with that, the demand for automobile tires excellent in fuel efficiency is increasing more and more to a higher level. For producing tires excellent in fuel efficiency, in general, use of a rubber material capable of giving a vulcanized rubber that is excellent in reduced heat build-up and hardly generates heat during running is effective.

Heretofore, as a rubber material for tires, generally used is a rubber composition that comprises a general-purpose rubber of, for example, natural rubber (NR), polybutadiene (BR), polyisoprene (IR), styrene-butadiene copolymer rubber (SBR) or their blend rubber, and carbon black added thereto as a reinforcing agent. However, the rubber composition of the type is insufficient in point of the reduced heat build-up; and therefore, for improving the reduced heat build-up, proposed is a method of adding silica in place of carbon black. However, the silica-containing rubber composition may be inferior to the carbon black-containing rubber composition in point of the abrasion resistance. The main reason may be because the affinity of silica to rubber is smaller than that of carbon black thereto, and therefore silica could not exhibit a sufficient reinforcing effect.

For improving the reduced heat build-up, a method is known of polymerizing a monomer mixture comprising a conjugated diene monomer using an organic lithium catalyst and causing the resultant polymer having an active terminal to react with a polyfunctional coupling agent such as tin tetrachloride to give a branched polymer. For example, Patent Reference 1 proposes a method comprising forming a high-vinyl styrene-butadiene copolymer having a butadienyl-lithium terminal through polymerization using an organic lithium compound, and then causing the copolymer to react with a coupling agent thereby producing a coupled polymer that has a bond of at least one metal selected from silicon, germanium, tin and lead with butadienyl in the molecular chain. However, the coupled polymer exhibits, when silica is added thereto, insufficient effects of improving the reduced heat build-up, and in addition, its abrasion resistance is poor.

Patent Reference 2 describes production of a conjugated diene rubber by a reaction of a polymer having an active terminal with a hydrocarbon polymer coupling agent bearing a functional group that has a number-average molecular weight of from 300 to 100, 000 and has a monomer unit having a functional group such as an epoxy group in a ratio of at least 5 per one polymer molecule. The conjugated diene rubber is excellent in reduced heat build-up and abrasion resistance, but the coupling reaction is unstable; and as the case may be, the reaction could not go on as intended.

Patent Reference 3 proposes a method of producing a diene polymer composition, comprising preparing an active metal-bonded active diene polymer through polymerization using an organic lithium compound, then causing the polymer to react with a coupling agent to give a branched diene polymer, and thereafter forming a linear diene polymer with a tertiary amino group introduced thereinto from the remaining copolymer. However, Patent Reference 3 shows that the diene copolymer coupled with tetramethoxysilane as a tetrafunctional coupling agent exhibits, when silica is added thereto, insufficient effects of improving reduced heat build-up and abrasion resistance.

Patent Reference 4 discloses a polymer produced by causing a compound having a methylene-amino group at the polymerization-active terminal of a polymer prepared through polymerization in an organic solvent using an organic lithium compound as an initiator, to react with an alkoxysilane compound having an epoxy group in the molecule. However, though the method is complicated and troublesome, the diene polymer obtained in that manner has poor reduced heat build-up and abrasion resistance.

Despite of some trials as in the above, a conjugated diene rubber excellent in mechanical strength, abrasion resistance and reduced heat build-up to a sufficiently satisfactory degree could not as yet be obtained.

Patent Reference 1: JP-A 57-55912

Patent Reference 2: JP-A 2004-107384

Patent Reference 3: Re-issue JP-T 97-39056

Patent Reference 4: JP-A 2001-131229

US patent 5,777,039 discloses block copolymers suitable for hot melt adhesive compositions characterized in that they have the general formula $(AB)_p(B1)_qX$, wherein A is poly(vinylaromatic) block and B and B1 are the same or different poly(butadiene) blocks, wherein the 1,2 addition (vinyl) content is in the range of from 25 to 70% by weight, wherein X is the residue of a multivalent coupling agent having a maximum of active sites (m) in the range of from 3 to 6, wherein p and q both are integers of from 0 to m, provided that the sum of p and q values is less than m and the coupling efficiency is less than 90%, said block copolymer having an average total vinyl aromatic content in the range of from 10 to 50 wt % and preferably in the range of from 10 to 30 wt %, and having a total apparent molecular weight in the range of from 100,000 to 500,000. Adhesive, sealant, or coating compositions comprising said block copolymers and in particular radiation curable compositions, the use of said compositions, and processes for the preparation of said block copolymers are also disclosed.

European patent application 1 221 460 A2 discloses an end-modified diene copolymer and a rubber composition for tire tread containing the same. More particularly, the document relates to a polymer and a rubber composition for tire tread comprising a mixture of the polymer with a vulcanizing agent and an inorganic filler such as carbon black and silica, the polymer being prepared by reacting the active end of a conjugate diene polymer, or a copolymer comprising at least one conjugate diene compound and a vinyl-substituted aromatic compound, polymerization-initiated using an organic lithium catalyst, with a coupling agent represented by the formula 1, $Y-\{C(R^3)(R^4)\}_c-CH_2CH_2-Si(R^1)(R^2)-\{O-Si(R^1)(R^2)\}_d-CH_2CH_2-\{C(R^3)(R^4)\}_c-Y$, in which Y represents $(X)_a(R)_bSi$, $(X)_a(R)_bC$ or $(X)_e(R^1)_fBz-X$; X represents a halogen atom selected from the group consisting of F, Cl, Br or I; R represents a lower alkyl group- containing 1 to 20 carbon atoms, including a methyl group, an ethyl group or a propyl group; $R^1$, $R^3$ and $R^4$ are same or different from one another and are selected from a hydrogen atom, a lower alkyl group 1 to 20 carbon atoms, a halogen-substituted alkyl group, or a halogen-substituted silane group; $R^2$ is the same as X or $R^1$, or represents $(X)_g(R^3)_hC-\{C(R^3)(R^4)\}_{c-1}$; a is 1 to 3; b is 0 to 2, wherein a + b = 3; c is 1 to 1,000; d is 1 to 50,000; e and f are independently 0 to 4, wherein e + f = 4; g and h are independently 0 to 3, wherein g + h = 3; and Bz-X represents benzyl halogen. The rubber composition for tire treads comprising the end-modified diene copolymer as an ingredient rubber enhances rolling resistance and wet skid resistance as well as mechanical properties directly concerned to the properties of the tires.

US patent application 2003/100683 A1 relates to a hydrogenated modified polymer which can afford a molded body excellent in improvement in the balance among impact resistance, strength, adherability and appearance, and a process for producing the same as well as a composition containing the same. The document further relates to a composition which can afford a molded body excellent in the balance among flame retardancy, tensile strength, tensile extension, heat resistance, low temperature characteristics, insulation property, pliability and the like. The hydrogenated modified polymer is a hydrogenated polymer of a modified conjugated diene-based polymer obtained by reacting an alkoxysilane compound with a polymer which is polymerized a conjugated diene or a conjugated diene and another monomer using an organic alkali metal compound as a polymerization initiator in an inert organic solvent such as cyclohexane and the like. The hydrogenated modified polymer composition contains the above-mentioned hydrogenated modified polymer and at least one selected from the group consisting of nonpolar polymer, polar polymer and filler.

US patent 5,369,175 discloses a method for preparing asymmetric radial polymers wherein the different polymeric arms are contacted sequentially with a coupling agent. The method narrows the relative arm distribution of the several asymmetric radial polymers produced- and significantly increases the amount of total product having the desired ratio of polymeric arms. Any coupling agent known in the prior art to be useful in the production of asymmetric radial polymers may be used in the method but coupling agents having from three to about twelve functional groups are most effective.

US patent 3,840,616 discloses a process of coupling isoprene-alkali metal terminated polymer chains with silicon-based coupling agents, which comprises adding a minor amount of butadiene effective as a coupling adjuvant after polymerization and prior to addition of said silicon-based coupling agent, wherein said minor amount of butadiene is sufficient to provide up to about 20 mols butadiene per equivalent of alkali metal in said polymer.

European patent application EP 1 457 501 A1 discloses conjugated diolefin (co)polymer rubber formed from either a conjugated diolefin or a conjugated diolefin and an aromatic vinyl compound, wherein the (co)polymer rubber has a primary amino group and an alkoxysilyl group which are bonded to a (co)polymer chain; a process for producing the same; a rubber composition; a composite; and a tire. The (co)polymer rubber has satisfactory processability, and can give an automotive tire tread having a balance among wear resistance, failure characteristics, low hysteresis loss and wet-skid characteristics.

DISCLOSURE OF THE INVENTION

PROBLEMS THAT THE INVENTION IS TO SOLVE

Accordingly, an object of the invention is to provide a conjugated diene rubber capable of giving a vulcanized rubber excellent in mechanical strength, abrasion resistance and reduced heat build-up, and a method for producing it. Another object of the invention is to provide a rubber composition for tires that contains a conjugated diene rubber having such excellent properties, and a tire obtained from it.

MEANS FOR SOLVING THE PROBLEMS

The present inventors have assiduously studied for the purpose of attaining the above-mentioned objects and, as a result, have found that, when a polymer bearing an active terminal obtained through polymerization of a monomer mixture comprising a conjugated diene monomer using an organic active metal as an initiator is coupled using a specific compound, then a conjugated diene rubber having a specific weight-average molecular weight can be obtained at a high coupling ratio, and that a vulcanized rubber excellent in mechanical strength, abrasion resistance and reduced heat build-up can be obtained using the conjugated diene rubber.
The invention has been completed on the basis of these findings.

According to the invention, there is provided the use of a conjugated diene rubber having a weight-average molecular weight of from 10,000 to 3,000,000 for manufacturing a tire or a sole, wherein the conjugated diene rubber is produced by a method characterized by adding a compound represented by the following general formula (I) as a coupling agent to a solution that contains a polymer having an active terminal obtained through polymerization of a monomer mixture comprising a conjugated diene monomer or a conjugated diene monomer and an aromatic vinyl monomer in an inert solvent using an organic active metal as an initiator, and causing the compound to react with the polymer having the active terminal.

$$[\text{Formula 1}] \quad SiX^1_p R^1_{3-p}\text{-}(A^1\text{-}A^3\text{-}A^2)_n\text{-}SiX^2_q R^2_{3-q} \qquad (I)$$

(In general formula (I), $X^1$ and $X^2$ each represent a halogen atom or an alkoxy group having from 1 to 20 carbon atoms. In the compound of general formula (I), the total of the number of the halogen atoms and the number of the alkoxy groups having from 1 to 20 carbon atoms is at least 5. $R^1$ and $R^2$ each represent a monovalent hydrocarbon group having from 1 to 20 carbon atoms. $A^1$ and $A^2$ each represent a single bond or a divalent hydrocarbon having from 1 to 20 carbon atoms. $A^3$ represent a group represented by a general formula (II), (III) or (IV). Plural $X^1$, $X^2$, $R^1$, $R^2$, $A^1$, $A^2$ or $A^3$, if any, may be each the same or different. p and q each indicate an integer of from 0 to 3. n indicates an integer of from 0 to 20; and when n is 2 or more, the plurality of repetitive units represented by $(A^1\text{-}A^3\text{-}A^2)$ may differ from each other.)

$$- (SiX^3_r R^3_{2-r})_m\text{-} \qquad (II)$$

{In general formula (II), $X^3$ represents a halogen atom or an alkoxy group having from 1 to 20 carbon atoms. $R^3$ represents a monovalent hydrocarbon group having from 1 to 20 carbon atoms. Plural $x^3$ or $R^3$, if any, may be each the same or different. r indicates an integer of from 0 to 2; m indicates an integer of from 0 to 20. When m is 2 or more, the plurality of repetitive units represented by $(SiX^3_r R^3_{2-r})$ may differ from each other. In the case where $A^3$ is represented by general formula (II), $(p+n\times m\times r+q)$ is an integer of at least 5.}

$$-NR^4\text{-} \qquad (III)$$

{In general formula (III), $R^4$ represents a hydrogen atom or a monovalent hydrocarbon group having from 1 to 20 carbon atoms. In the case where $A^3$ is represented by general formula (III), $(p+q)$ is 5 or 6.)

$$-N(\text{-}A^5\text{-}SiX^5_s R^5_{3-s})\text{-} \qquad (IV)$$

{In general formula (IV), $A^5$ represents a single bond or a divalent hydrocarbon group having from 1 to 20 carbon atoms. $X^5$ represents a halogen atom or an alkoxy group having from 1 to 20 carbon atoms. $R^5$ represents a monovalent hydrocarbon group having from 1 to 20 carbon atoms. Plural $X^5$ or $R^5$, if any, may be each the same or different. s indicates an integer of from 0 to 3. In the case where $A^3$ is represented by general formula (IV), $(p+n\times s+q)$ is an integer of at least 5.)

In the method for producing a conjugated diene rubber used according to the invention, preferably $X^1$ and $X^2$ in general formula (I) are each simultaneously a halogen atom or an alkoxy group having from 1 to 20 carbon atoms. (1) In the case where $X^1$ and $X^2$ are both a halogen atom, preferably, the compound of general formula (I) has at least 5 halogen atoms; $A^3$ is a group represented by general formula (II) ; and $X^3$ in general formula (II) is a halogen atom, and (2) in the case where $X^1$ and $X^2$ are both an alkoxy group having from 1 to 20 carbon atoms, preferably, the compound of general formula (I) has at least 5 alkoxy groups having from 1 to 20 carbon atoms; $A^3$ is a group represented by general formula (II), (III) or (IV); $X^3$ in general formula (II) is an alkoxy group having from 1 to 20 carbon atoms; and $X^5$

in general formula (IV) is an alkoxy group having from 1 to 20 carbon atoms.

In the method for producing a conjugated diene rubber used according to the invention, the coupling agent is preferably a silicon halide compound represented by the following general formula (V):

$$SiX^1_pR^1_{3-p}\text{-}A^6\text{-}SiX^2_3 \qquad (V)$$

(In general formula (V), $X^1$ and $X^2$ each represent a halogen atom, and plural $X^1$ or $X^2$, if any, may be each different halogen atoms. $R^1$ represents a monovalent hydrocarbon group having from 1 to 20 carbon atoms. $A^6$ represents a single bond, a polymethylene group having from 1 to 20 carbon atoms (($CH_2)_k$ (k indicates an integer of from 1 to 20)), an arylene group or a cycloalkylene group. p is 2 or 3.}

In the method for producing a conjugated diene rubber used according to the invention, the coupling agent is preferably an alkoxysilane compound of the following general formula (VI), (VII) or (VIII):

$$SiX^1_pR^1_{3-p}\text{-}A^6\text{-}SiX^2_3 \qquad (VI)$$

{In general formula (VI), $X^1$ and $X^2$ each represent an alkoxy group having from 1 to 20 carbon atoms, and plural $X^1$ or $X^2$, if any, may be each different alkoxy groups. $R^1$ represents a monovalent hydrocarbon group having from 1 to 20 carbon atoms. $A^6$ represents a single bond, a polymethylene group having from 1 to 20 carbon atoms (($CH_2)_k$ (k indicates an integer of from 1 to 20)), an arylene group or a cycloalkylene group. p is 2 or 3.}

$$SiX^1_pR^1_{3-p}\text{-}A^7\text{-}NR^4\text{-}A^8\text{-}SiX^2_3 \qquad (VII)$$

{In general formula (VII), $X^1$ and $X^2$ each represent an alkoxy group having from 1 to 20 carbon atoms, and plural $X^1$ or $X^2$, if any, may be each different alkoxy groups. $R^1$ represents a monovalent hydrocarbon group having from 1 to 20 carbon atoms. $R^4$ represents a hydrogen atom or a monovalent hydrocarbon group having from 1 to 20 carbon atoms. $A^7$ and $A^8$ each represent a single bond, a polymethylene group having from 1 to 20 carbon atoms (($CH_2)_k$ (k indicates an integer of from 1 to 20)), an arylene group or a cycloalkylene group. In $A^7$ and $A^8$, the number of the methylene groups may be the same or different. p is 2 or 3.}

$$SiX^1_pR^1_{3-p}\text{-}A^9\text{-}N(\text{-}A^{10}\text{-}SiX^5_sR^5_{3-s})\text{-}A^{11}\text{-}SiX^2_3 \qquad (VIII)$$

{In general formula (VIII), $X^1$, $X^2$ and $X^5$ each represent an alkoxy group having from 1 to 20 carbon atoms, and plural $X^1$, $X^2$ or $X^5$, if any, may be each different alkoxy groups. $R^1$ and $R^5$ each represent a monovalent hydrocarbon group having from 1 to 20 carbon atoms. $A^9$, $A^{10}$ and $A^{11}$ each represent a single bond, a polymethylene group having from 1 to 20 carbon atoms (($CH_2)_k$ (k indicates an integer of from 1 to 20)), an arylene group or a cycloalkylene group. In $A^9$, $A^{10}$ and $A^{11}$, the number of the methylene groups may be the same or different. p and s each indicate an integer of from 0 to 3, and (p+s) is an integer of from 2 to 6.}

In the method for producing a conjugated diene rubber used according to the invention, the vinyl bond content in the conjugated diene monomer unit segment in the conjugated diene rubber is preferably at least 5 % by weight.

In the method for producing a conjugated diene rubber used according to the invention, the polymer having an active terminal preferably has a peak top molecular weight of from 2,000 to 1,200,000.

In the method for producing a conjugated diene rubber used according to the invention, the coupling agent is caused to react under the condition where the solution containing the polymer having the active terminal contains at least 100 ppm of the monomer.

In the method for producing a conjugated diene rubber, a polar compound is preferably added to the inert solvent in polymerization of the monomer mixture.

In the conjugated diene rubber used according to the invention, the vinyl bond content in the conjugated diene monomer unit segment is preferably at least 5 % by weight.

The conjugated diene rubber used according to the invention may contain an extender oil.

Further according to the invention, there may be used a rubber composition containing a rubber component that contains at least 10 % by weight of the above-mentioned Conjugated diene rubber used according to the invention.

The rubber composition used according to the invention preferably contains a filler in an amount of from 5 to 150 parts by weight relative to 100 parts by weight of the rubber component.

Further, the rubber composition used according to the invention is preferably provided as a rubber composition for tires.

Further according to the invention, there is provided a tire or a sole made of the above-mentioned rubber composition.

ADVANTAGES OF THE INVENTION

According to the above production method for a conjugated diene rubber a conjugated diene rubber having a desired molecular weight can be obtained stably with ease. Using the conjugated diene rubber obtained according to the production method, a tire excellent in mechanical strength, abrasion resistance and reduced heat build-up can be obtained.

BEST MODE FOR CARRYING OUT THE INVENTION

In the method for producing a conjugated diene rubber used according to the invention, a polymer having an active terminal obtained through polymerization of a monomer mixture containing a conjugated diene monomer or a conjugated diene monomer and an aromatic vinyl monomer (this may be hereinafter simply referred to as "polymer with an active terminal") is reacted with a specific coupling agent.
The polymer with an active terminal is obtained by polymerizing a monomer mixture containing a conjugated diene monomer or a conjugated diene monomer and an aromatic vinyl monomer in an inert solvent using an organic active metal as an initiator.
The monomer mixture as referred to herein is under the concept that it includes a single monomer alone.

The conjugated diene monomer for use in the invention is not specifically limited. Its specific examples include 1,3-butadiene, 2-methyl-1,3-butadiene (isoprene), 2,3-dimethyl-1,3-butadiene, 2-chloro-1,3-butadiene, 1,3-pentadiene, 1,3-hexadiene, and the like. Of those, preferred are 1,3-butadiene and 2-methyl-1,3-butadiene.
One or more conjug.ated diene monomers may be used either singly or as combined.

The polymer with an active terminal may be one prepared through copolymerization of a conjugated diene monomer and an aromatic vinyl monomer. A conjugated diene rubber having excellent mechanical strength may be obtained by copolymerization with an aromatic vinyl monomer.
The aromatic vinyl monomer is not specifically limited. Its specific examples include styrene, $\alpha$-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, vinylnaphthalene, dimethylaminomethylstyrene, dimethylaminoethylstyrene, and the like. Of those, styrene, $\alpha$-methylstyrene or 4-methylstyrene is preferably used, and more preferably styrene is used.
One or more aromatic vinyl monomers may be used either singly or as combined.

The ratio of the conjugated diene monomer to the aromatic vinyl monomer is preferably such that the ratio of conjugated diene monomer/aromatic vinyl monomer falls within a range of from (50 to 100 % by weight) / (50 to 0 % by weight), more preferably within a range of from (50 to 95 % by weight)/(50 to 5 % by weight), even more preferably within a range of from (55 to 90 % by weight)/(45 to 10 % by weight), still more preferably from (60 to 85 % by weight) / (40 to 15 % by weight).

The polymer with an active terminal may optionally contain any other monomer unit than the conjugated diene monomer and the aromatic vinyl monomer.
The other monomer than the conjugated diene monomer and the aromatic vinyl monomer includes, as its examples, $\alpha$, $\beta$-ethylenically unsaturated nitriles such as acrylonitrile and methacrylonitrile; $\alpha,\beta$-ethylenically unsaturated carboxylic acids or acid anhydrides such as acrylic acid, methacrylic acid and maleic anhydride; $\alpha,\beta$-ethylenically unsaturated carboxylates such as methyl methacrylate, ethyl acrylate and butyl acrylate; non-conjugated dienes such as 1,5-hexadiene, 1,6-heptadiene, 1,7-octadiene, dicyclopentadiene and 5-ethylidene-2-norbornene; and the like.
The amount of these monomers to be used is preferably at most 10 % by weight of all the monomers, more preferably at most 5 % by weight.

The monomer mixture containing a conjugated diene monomer or a conjugated diene monomer and an aromatic vinyl monomer is polymerized, using an organic active metal as an initiator.
As the organic active metal, preferably used is an organic alkali metal compound. Its specific examples include organic monolithium compounds such as n-butyllithium, sec-butyllithium, t-butyllithium, hexyllithium, phenyllithium and stilbene-lithium; organic polylithium compounds such as dilithiomethane, 1,4-dilithiobutane, 1,4-dilithio-2-ethylcyclohexane and 1,3,5-trilithiobenzene; organic sodium compounds such as sodium-naphthalene; organic potassium compounds such as potassium-naphthalene; and the like. Of those, preferred are organic lithium compounds, and more preferred are organic monolithium compounds.
The organic alkali metal compound may be previously reacted with a secondary amine such as dibutylamine, dihexylamine, dibenzylamine, pyrrolidine, hexamethyleneimine or heptamethyleneimine, preferably pyrrolidine, hexamethyleneimine or heptamethyleneimine, thereby giving an organic alkali metal amide compound for use herein.
One or more organic active metals may be used either singly or as combined.
The amount of the organic active metal to be used is preferably within a range of from 1 to 50 mmoles, more preferably within a range of from 2 to 20 mmoles, per 1,000 g of the monomer mixture.

The monomer mixture containing a conjugated diene monomer or a conjugated diene monomer and an aromatic vinyl monomer is polymerized in an inert organic solvent.

Any inert organic solvent generally used in solution polymerization without interfering with the polymerization may be used herein with no specific limitation. Its examples include aliphatic hydrocarbons such as butane, pentane, hexane and 2-butene; alicyclic hydrocarbons such as cyclopentane, cyclohexane and cyclohexene; aromatic hydrocarbons such as benzene, toluene and xylene; and the like.

The amount of the inert organic solvent to be used may be generally such that the monomer concentration could be from 1 to 50 % by weight, preferably from 10 to 40 % by weight.

In polymerizing the monomer mixture containing a conjugated diene monomer or a conjugated diene monomer and an aromatic vinyl monomer, the polymerization temperature may be generally within a range of from -78 to +150°C, preferably from 0 to 100°C, more preferably from 30 to 90°C.

As the polymerization mode, any of batch-mode, continuous-mode and the like may be employed herein; but in the case where a conjugated diene monomer is copolymerized with an aromatic vinyl monomer, batch-mode polymerization is preferred from the viewpoint that the randomness in the linkage of the conjugated diene monomer unit with the aromatic vinyl monomer unit is easy to control.

For controlling the vinyl bond content in the conjugated diene monomer unit in the polymer with an active terminal, a polar compound is preferably added to the inert organic solvent in polymerization.

The polar compound includes ether compounds such as dibutyl ether and tetrahydrofuran; tertiary amines such as tetramethylethylenediamine; alkali metal alkoxides; phosphine compounds; and the like. Of those, preferred are ether compounds and tertiary amines; more preferred are tertiary amines; and even more preferred is tetramethylethylenediamine.

The amount of the polar compound to be used is preferably within a range of from 0.01 to 100 moles relative to 1 mol of the organic active metal, more preferably from 0. 3 to 30 moles. When the amount of the polar compound to be used is within the range above, then the vinyl bond content in the conjugated diene monomer unit may be easy to control, and the system may be almost free from inconvenience to be caused by catalyst deactivation.

In the invention, the polymer with an active terminal preferably has a peak top molecular weight of from 2,000 to 1, 200, 000, more preferably from 40, 000 to 1, 200, 000, even more preferably from 150,000 to 1,000,000, still more preferably from 300,000 to 700,000. When the peak top molecular weight of the polymer with an active terminal falls within the above range, then the conjugated diene rubber used according to the invention may have a suitable weight-average molecular weight.

The molecular weight distribution of the polymer with an active terminal used according to the invention, which is represented by the ratio of the weight-average molecular weight (Mw) to the number-average molecular weight (Mn) thereof, (Mw/Mn) is preferably from 1.01 to 4.0, more preferably from 1.02 to 3.5, even more preferably from 1.03 to 3.0. The polymer of which the molecular weight distribution value (Mw/Mn) is too small may be difficult to produce; but when the ratio Mw/Mn of the polymer is too large, then the reduced heat build-up of the obtained conjugated diene rubber may be poor.

In the polymer with an active terminal, the vinyl bond content in the conjugated diene monomer unit is preferably at least 5% by weight, more preferably at least 12 % by weight. In the case where a silicon halide compound coupling agent is used, the vinyl bond content is further preferably from 20 to 80 % by weight, most preferably from 30 to 65 % by weight. In the case where an alkoxysilane compound coupling agent is used, the content is further preferably from 12 to 80 % by weight, even more preferably from 20 to 65 % by weight.

When the vinyl bond content falls within the above range, a conjugated diene rubber excellent in the balance between abrasion resistance and reduced heat build-up can be obtained.

In the case where 1,3-butadiene is used as a monomer, the above-mentioned polar compound must be used in order that the vinyl bond content in the conjugated diene monomer unit segment in the conjugated diene rubber could be at least 5 % by weight, in general.

In the case where the polymer with an active terminal has a conjugated diene monomer unit and an aromatic vinyl monomer unit, the bonding mode of the conjugated diene monomer unit with the aromatic vinyl monomer unit may be any bonding mode of, for example, blocked bonding, tapered bonding, random bonding or the like, but is preferably a random bonding mode. Thus, the conjugated diene rubber used according to the invention obtained using polymer with an active terminal of the type may be more excellent in the reduced heat build-up thereof.

For enhancing the randomness in the linkage of the conjugated diene monomer unit with the aromatic vinyl monomer unit, the mixture that contains a conjugated diene monomer or a conjugated diene monomer and an aromatic vinyl monomer is preferably fed continuously or intermittently into a polymerization system to be polymerized so that the ratio of the aromatic vinyl monomer to the total of the conjugated diene monomer and the aromatic vinyl monomer in the polymerization system could not be too high.

A compound represented by the general formula (I) is added as a coupling agent to an inert solvent solution of the polymer with an active terminal obtained in the manner as above, and is caused to react with the polymer with an active terminal to give a conjugated diene rubber used according to the invention.

$$[Formula\ 2]\ SiX^1_pR^1_{3-p}-(A^1-A^3-A^2)_n-SiX^2_qR^2_{3-q}\qquad (I)$$

In general formula (I), $X^1$ and $X^2$ each represent a halogen atom or an alkoxy group having from 1 to 20 carbon atoms. In the compound of general formula (I), the total of the number of the halogen atoms and the number of the alkoxy groups having from 1 to 20 carbon atoms is at least 5.

p and q each indicate an integer of from 0 to 3.

n indicates an integer of from 0 to 20; and when n is 2 or more, the plurality of repetitive units represented by $(A^1-A^3-A^2)$ may differ from each other.

Plural $X^1$ or $X^2$, if any, may be each the same or different, but preferably, all of $X^1$ and $X^2$ are a halogen atom, or an alkoxy group having from 1 to 20 carbon atoms.

The halogen atom is not specifically limited. Its examples include a fluorine atom, a chlorine atom, a bromine atom and an iodine atom.

The number of the carbon atoms of the alkoxy group is preferably from 1 to 10, more preferably from 1 to 6. Specific examples of the alkoxy group include a methoxy group, an ethoxy group, a propoxy group, a butoxy group, a pentoxy group, a hexoxy group, and the like. Of those, preferred are a methoxy, group and an ethoxy group from the viewpoint of shortening the reaction time with the polymer with an active terminal.

$R^1$ and $R^2$ each represent a monovalent hydrocarbon group having from 1 to 20 carbon atoms. $R^1$ and $R^2$ may be the same or different. Plural $R^1$ or $R^2$, if any, may be each the same or different. Specific examples of the monovalent hydrocarbon group having from 1 to 20 carbon atoms include an alkyl group having from 1 to 20 carbon atoms such as a methyl group, an ethyl group, an n-propyl group, an isopropyl group, an n-butyl group, an isobutyl group, a sec-butyl group, a t-butyl group, an n-pentyl group, an n-hexyl group, an n-heptyl group, an n-octyl group, an n-nonyl group and an n-decyl group; a cycloalkyl group having from 3 to 6 carbon atoms such as a cyclopentyl group and a cyclohexyl group; an aralkyl group having from 7 to 20 carbon atoms such as a benzyl group, a 2-phenylethyl group and a 3-phenylpropyl group; an aryl group having from 6 to 20 carbon atoms such as a phenyl group, a 1-naphthyl group and a 2-naphthyl group; and the like. Of those, preferred is an alkyl group having from 1 to 20 carbon atoms; more preferred is an alkyl group having from 1 to 10 carbon atoms; even more preferred is a methyl group or an ethyl group.

The alkyl group, the aralkyl group and the aryl group may have a substituent at any position.

In general formula (I), $A^1$ and $A^2$ each represent a single bond or a divalent hydrocarbon having from 1 to 20 carbon atoms. $A^1$ and $A^2$ may be the same or different. Plural $A^1$ or $A^2$, if any, may be each the same or different.

The divalent hydrocarbon group having from 1 to 20 carbon atoms includes a linear alkylene group having from 1 to 20 carbon atoms such as a methylene group, an ethylene group and an n-propylene group; an alkylidene group having from 2 to 20 carbon atoms such as an ethylidene group, an isopropylidene group and a vinylidene group; a branched alkylene group having from 3 to 20 carbon atoms such as an isopropylene group; a cycloalkylene group having from 3 to 6 carbon atoms such as a cyclohexylene group; an arylene group having from 6 to 20 carbon atoms such as a phenylene group; an alkylarylene group having from 7 to 20 carbon atoms; an arylalkylene group having from 7 to 20 carbon atoms; and the like.

Preferably, $A^1$ and $A^2$ each are a single bond or a linear alkylene group having from 1 to 20 carbon atoms, more preferably a single bond or a linear alkylene group having from 1 to 6 carbon atoms.

In general formula (I), $A^3$ represents a group represented by a general formula (II), (III) or (IV) Plural $A^3$, if any, may be the same or different.

$$-(SiX^3_rR^3_{2-r})_m-\qquad (II)$$

In general formula (II), $X^3$ represents a halogen atom or an alkoxy group having from 1 to 20 carbon atoms. As specific examples of the halogen atom and the alkoxy group having from 1 to 20 carbon atoms, herein mentioned are the same as those exemplified for $X^1$ and $X^2$.

$R^3$ represents a monovalent hydrocarbon group having from 1 to 20 carbon atoms. For the monovalent hydrocarbon group having from 1 to 20 carbon atoms, herein mentioned are the same as those exemplified for $R^1$ and $R^2$.

Plural $x^3$ or $R^3$, if any, may be each the same or different.

r indicates an integer of from 0 to 2; m indicates an integer of from 0 to 20. m is preferably an integer of from 0 to 10, more preferably an integer of from 1 to 3, even more preferably 1. In the case where m is 2 or more, the plurality of repetitive units represented by $-(SiX^3_rR^3_{2-r})-$ may differ from each other. In the case where $A^3$ is represented by general formula (II), $(p+n\times m\times r+q)$ is an integer of at least 5.

$$-NR^4- \qquad (III)$$

In general formula (III), $R^4$ represents a hydrogen atom or a monovalent hydrocarbon group having from 1 to 20 carbon atoms. For the monovalent hydrocarbon group having from 1 to 20 carbon atoms, herein mentioned are the same as those exemplified for $R^1$ and $R^2$.

In the case where $A^3$ is represented by general formula (III), (p+q) is 5 or 6.

$$-N(-A^5-SiX^5{}_sR^5{}_{3-s})- \qquad (IV)$$

In general formula (IV), $A^5$ represents a single bond or a divalent hydrocarbon group having from 1 to 20 carbon atoms. As specific examples of the divalent hydrocarbon group having from 1 to 20 carbon atoms, herein mentioned are the same as those exemplified for $A^1$ and $A^2$.

$X^5$ represents a halogen atom or an alkoxy group having from 1 to 20 carbon atoms. As specific examples of the halogen atom and the alkoxy group having from 1 to 20 carbon atoms, herein mentioned are the same as those exemplified for $X^1$ and $X^2$.

$R^5$ represents a monovalent hydrocarbon group having from 1 to 20 carbon atoms. For the monovalent hydrocarbon group having from 1 to 20 carbon atoms, herein mentioned are the same as those exemplified for $R^1$ and $R^2$.

Plural $X^5$ or $R^5$, if any, may be each the same or different. s indicates an integer of from 0 to 3. In the case where $A^3$ is represented by general formula (IV), $(p+n \times s+q)$ is an integer of at least 5.

In general 1 formula (I), in the case where $X^1$ and $X^2$ are both halogen atoms, $A^3$ is preferably one represented by general formula (II).

In this case, in general formula (II), $X^3$ is preferably a halogen atom. Accordingly, the coupling agent of general formula (I) of this case is a silicon halide compound.

In the case where the compound of general formula (I) is a silicon halide compound, preferably it has from 5 to 10 halogen atoms in one molecule, more preferably from 6 to 9 halogen atoms in one molecule, most preferably 6 halogen atoms in the molecule. When the number of the halogen atoms in the silicon polyhalide compound is too small, then the branching degree of the obtained conjugated diene rubber may be insufficient resulting in that the mechanical strength and the reduced heat build-up of the conjugated diene rubber may be therefore insufficient. In the case where the number of the halogen atoms in the silicon polyhalide compound is too large, when the compound is reacted with a polymer with an active terminal in an inert solvent, then the viscosity of the solution may be too high and therefore it may be difficult to produce a conjugated diene rubber.

The halogen atoms in the compound of general formula (I) may be the same or different; but from the viewpoint of facilitating the treatment of the salt to be produced as a side product in the coupling reaction, all the halogen atoms are especially preferably chlorine atoms.

As the silicon halide compound favorably used as the coupling agent in the invention, mentioned is a silicon halide compound represented by the following general formula (V):

$$SiX^1{}_pR^1{}_{3-p}-(CH_2)_k-SiX^2{}_3 \qquad (V)$$

In general formula (V), $X^1$ and $X^2$ each represent a halogen atom, and plural $X^1$ or $X^2$, if any, may be each different halogen atoms.

$R^1$ represents a monovalent hydrocarbon group having from 1 to 20 carbon atoms. Preferably, it is an alkyl group having from 1 to 20 carbon atoms, particularly preferably a methyl group or an ethyl group.

k indicates an integer of from 0 to 20, and is preferably an integer of from 0 to 10, more preferably an integer of from 0 to 6, even more preferably an integer of from 0 to 2.

p is 2 or 3, more preferably 3.

Specific examples of the compound of general formula (V) include hexachlorodisilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Of those, preferred is use of hexachlorodisilane, bis(trichlorosilyl)methane or 1,2-bis(trichlorosilyl)ethane; and more preferred is use of 1,2-bis(trichlorosilyl)ethane.

One or more these silicon halide compounds may be used either singly or as combined.

In the case where $X^1$ and $X^2$ in general formula (I) are both an alkoxy group having from 1 to 20 carbon atoms, $A^3$ is preferably a group represented by general formula (II), (III) or (IV).

In this case, in general formula (II), $X^3$ is preferably an alkoxy group having from 1 to 20 carbon atoms, more preferably an alkoxy group having from 1 to 10 carbon atoms. In general formula (IV), $X^5$ is preferably an alkoxy group having from 1 to 20 carbon atoms, more preferably an alkoxy group having from 1 to 10 carbon atoms, even more preferably an alkoxy group having from 1 to 6 carbon atoms.

In these cases; the coupling agent represented by general formula (I) is an alkoxysilane compound.

Specific examples of the group represented by general formula (III), $-NR^4-$ include a methylimino group, an ethylimino group, a propylimino group, a phenylimino group, a benzylimino group, and the like.

Specific examples of the group represented by general formula (IV), $-N(-A^4-SiX^5_sR^5_{3-s})-$ include a trimethoxysilylpropylimino group, a triethoxysilylpropylimino group, and the like.

In the case where the compound of general formula (I) is an alkoxysilane compound, preferably it has at least 5 alkoxy groups in one molecule, more preferably from 5 to 10 alkoxy groups, even more preferably from 6 to 9 alkoxy groups, most preferably 6 alkoxy groups. When the number of the alkoxy groups is too small, then the branching degree of the conjugated diene rubber obtained using the coupling agent may be insufficient resulting in that the mechanical strength and the reduced heat build-up of the conjugated diene rubber may be therefore insufficient. In the case where the number of the alkoxy groups is too large, and when the coupling agent is reacted with a polymer with an active terminal in an inert solvent, then the viscosity of the solution may be too high and therefore it may be difficult to produce a conjugated diene rubber.

The alkoxysilane compound to be used as the coupling agent in the invention is preferably a compound represented by the following general formula (VI), (VII) or (VIII):

$$SiX^1_pR^1_{3-p}-A^6-SiX^2_3 \qquad (VI)$$

$$SiX^1_pR^1_{3-p}-A^7-NR^4-A^8-SiX^2_3 \qquad (VII)$$

$$SiX^1_pR^1_{3-p}-A^9-N\,(-A^{10}-SiX^5_sR^5_{3-s})-A^{11}-SiX^2) \qquad (VIII)$$

In formulae (VI), (VII) and (VIII), $X^1$, $X^2$ and $X^5$ each represent an alkoxy group having from 1 to 20 carbon atoms, and plural $X^1$, $X^2$ or $X^5$, if any, may be each the same or different.

$R^1$ and $R^5$ each represent a hydrocarbon group having from 1 to 20 carbon atoms, preferably a hydrocarbon group having from 1 to 6 carbon atoms, more preferably a hydrocarbon group having from 1 to 3 carbon atoms.

$R^4$ represents a hydrocarbon group having from 1 to 20 carbon atoms, preferably a hydrocarbon group having from 1 to 10 carbon atoms.

$A^6$ to $A^{11}$ each represents a single bond, a polymethylene group having from 1 to 20 carbon atoms $((CH_2)_k)$, an arylene group or a cycloalkylene group. In $A^6$ to $A^{11}$, the number of the methylene groups, k, may be the same or different. k is preferably from 1 to 8.

In general formula (VI) or (VII), p indicates 2 or 3; in formula (VIII), p and s each indicate an integer of from 0 to 3, and (p+s) is an integer of from 2 to 6.

Specific examples of the alkoxysilane compound represented by general formula (VI) include hexamethoxydisilane, hexaethoxydisilane, bis(trimethoxysilyl)methane, bis(triethoxysilyl)methane, bis(trimethoxysilyl)ethane, bis(triethoxysilyl)ethane, bis(trimethoxysilyl)propane, bis(triethoxysilyl)propane, bis(trimethoxysilyl)butane, bis(triethoxysilyl)butane, bis(trimethoxysilyl)heptane, bis(triethoxysilyl)heptane, bis(trimethoxysilyl)hexane, bis(triethoxysilyl)hexane, bis(trimethoxysilyl)benzene, bis(triethoxysilyl)benzene, bis(trimethoxysilyl)cyclohexane, bis(triethoxysilyl)cyclohexane, bis(triethoxysilyl)benzene, bis(3-trimethoxysilylpropyl)ethane, bis(3-triethoxysilylpropyl)ethane, and the like.

Specific examples of the alkoxysilane compound represented by general formula (VII) include bis(3-trimethoxysilylpropyl)methylamine, bis(3-triethoxysilylpropyl)methylamine, bis(3-trimethoxysilylpropyl)ethylamine, bis(3-triethoxysilylpropyl)ethylamine, bis(3-trimethoxysilylpropyl)propylamine, bis(3-triethoxysilylpropyl)propylamine, bis(3-trimethoxysilylpropyl)butylamine, bis(3-triethoxysilylpropyl)butylamine, bis(3-trimethoxysilylpropyl)phenylamine, bis(3-triethoxysilylpropyl)phenylamine, bis(3-trimethoxysilylpropyl)benzylamine, bis(3-triethoxysilylpropyl)benzylamine, bis(trimethoxysilylmethyl)methylamine, bis(triethoxysilylmethyl)methylamine, bis(2-trimethoxysilylethyl)methylamine, bis(2-triethoxysilylethyl)methylamine, bis(triethoxysilylmethyl)propylamine, bis(2-triethoxysilylethyl)propylamine, and the like.

Further, specific examples of the alkoxysilane compound represented by formula (VIII) include tris(trimethoxysilylmethyl)amine, tris(2-triethoxysilylethyl)amine, tris(3-trimethoxysilylpropyl)amine, tris(3-triethoxysilylpropyl)amine, and the like.

In the invention, one or more coupling agents may be reacted with a polymer with an active terminal, either singly or as combined.

The amount of the coupling agent to be reacted with a polymer with an active terminal is set so that the molar number of the halogen atom or the alkoxy group in the coupling agent is generally from 0. 05 to 10 moles per mol of the organic active metal used in polymerization, preferably from 0.3 to 2 moles, more preferably from 0. 6 to 1.5 moles. When the amount thereof to be used falls within the range, then a conjugated diene rubber more excellent in mechanical strength, abrasion resistance and reduced heat build-up may be obtained.

The method for causing the polymer with an active terminal to react with the coupling agent is not specifically limited. In general, a coupling agent may be added to a solution containing a polymer with an active terminal to react with it. In the case where a coupling agent is added to a solution containing a polymer with an active terminal, preferably a solution obtained by dissolving the coupling agent in an inert organic solvent is added to the solution containing a polymer with an active terminal, from the viewpoint of favorably controlling the coupling reaction.

The concentration of the coupling agent solution is preferably from 1 to 50 % by weight; and the inert organic solvent to be used for the solution may be the same one as that used in polymerization of the monomer mixture.

The time when the coupling agent is added to the solution containing the polymer with an active terminal is not specifically limited, but preferably, the coupling agent is added to the solution under the condition where the polymerization is not as yet completed and the solution containing the polymer with an active terminal. still contains the monomer, more concretely, under the condition where the solution containing the polymer with an active terminal still contains the monomer in an amount of at least 100 ppm (more preferably from 300 to 50,000 ppm). When the coupling agent is added in that manner, then the side reaction between the polymer with an active terminal and the impurities and the like in the polymerization system may be prevented and the coupling reaction may be thereby controlled well.

The condition for the reaction of the polymer with an active terminal and the coupling agent is not specifically limited. The reaction temperature may be generally within a range of from 0 to 100°C, preferably from 30 to 90°C; and the reaction time may be generally within a range of from 1 to 120 minutes, preferably from 2 to 60 minutes.

The conjugated diene rubber used according to the invention may contain a terminally modified polymer having a modifying group introduced into the polymer end.

As the method for introducing a modifying group into the polymer end, a part of the polymer with an active terminal may be reacted with a modifying agent and thereafter the remaining unreacted active terminal may be reacted with a silicon compound having a halogen atom and/or an alkoxy group with the total number of the halogen atom and/or the alkoxy group of at least 5; or a part of the active terminal may be reacted with a silicon compound having a halogen atom and/or an alkoxy group with the total number of the halogen atom and/or the alkoxy group of at least 5 and then the remaining unreacted active terminal may be reacted with a modifying agent.

The modifying agent to be used in this case is not specifically limited. Its specific examples include N-substituted cyclic amides such as N-methyl-2-pyrrolidone, N-vinyl-2-pyrrolidone, N-phenyl-2-pyrrolidone and N-methyl-ε-caprolactam; N-substituted cyclic ureas such as 1,3-dimethylethyleneurea and 1,3-diethyl-2-imidazolidinone; N-substituted aminoketones such as 4,4'-bis(dimethylamino)benzophenone and 4,4'-bis(diethylamino)benzophenone; aromatic isocyanates such as diphenylmethane diisocyanate and 2,4-tolylene diisocyanate; N,N-di-substituted aminoalkylmethacrylamides such as N, N-dimethylaminopropylmethacrylamide; N-substituted aminoaldehydes such as 4-N,N-dimethylaminobenzaldehyde; N,N-di-substituted aminoalkylalkoxysilanes such as N,N-bis(trimethylsilyl)aminopropyltriethoxysilane and N,N-bis(trimethylsilyl)aminopropylmethyldiethoxysilane; N-substituted carbodiimides such as dicyclohexylcarbodiimide; Schiff bases such as N-ethylethylideneimine and N-methylbenzylideneimine; epoxy group-having compounds such as propylene oxide, tetraglycidyl-1,3-bisaminomethylcyclohexane and epoxidated polybutadiene; pyridyl group-having vinyl compounds such as 4-vinylpyridine; alkoxy group-having compounds such as bis(triethoxysilylpropyl) tetrasulfide, bis(tributoxysilylpropyl) tetrasulfide, γ-glycidoxypropyltrimethoxysilane, methyltriphenoxysilane and tetramethoxysilane; metal halide compounds such as tin tetrachloride, silicontetrachloride, triphenoxychlorosilane, methyltriphenoxysilane and diphenoxysilane; polyorganosiloxane compounds as described in WO03/102053; and the like.

When a polymer with an active terminal is reacted with a silicon compound having a halogen atom and/or an alkoxy group with the total number of the halogen atom and/or the alkoxy group of at least 5, and then, if desired, an alcohol such as methanol or isopropanol and water are added thereto to stop the reaction, then a solution containing a conjugated diene rubber is obtained.

Next, if desired, an antioxidant, a crumbing agent, a scale inhibitor and the like may be added to the polymerization solution, and then the solvent is removed by direct drying or steam stripping thereby to collect the intended conjugated diene rubber. Before the solvent removal, an extender oil may be added to the solution and the product may be collected as an oil extended rubber.

The extender oil to be used for collecting the conjugated diene rubber as an oil extended rubber may be any one generally used in the rubber industry, including paraffinic, aromatic or naphthenic petroleum-based softeners; vegetable-based softeners; fatty acids; and the like. In the case where the petroleum-based softener is used, the polycyclic aromatic content thereof is preferably less than 3%. The content may be determined according to the method of IP346 (Test Method by the Institute Petroleum in England). In the case where an extender oil is used, its amount may be generally from 5 to 100 parts by weight relative to 100 parts by weight of the conjugated diene rubber, preferably from 10 to 60 parts by weight, more preferably from 20 to 50 parts by weight.

Thus obtained, the conjugated diene rubber used according to the invention must have a weight-average molecular weight of from 10,000 to 3,000,000.

In the case where a silicon halide compound is used as the coupling agent, the weight-average molecular weight is preferably from 150,000 to 2,000,000, more preferably from 420,000 to 1,800,000, most preferably from 700,000 to 1,500,000. In the case where an alkoxysilane compound is used as the coupling agent, the weight-average molecular weight is preferably from 200,000 to 2,000,000, more preferably from 300,000 to 1,500,000. When the weight-average molecular weight of the conjugated diene rubber is too low, then the production may be difficult and the mechanical strength, the abrasion resistance and the reduced heat build-up of the product may be poor; but when too high, then the processability may be poor.

The molecular weight distribution of the conjugated diene rubber, which is represented by the ratio of the weight-average molecular weight (Mw) to the number-average molecular weight (Mn) thereof, (Mw/Mn) is preferably from 1.2 to 3.0, more preferably from 1.4 to 2.3. The conjugated diene rubber having Mw/Mn that falls within the range may have good processability, and in addition, its reduced heat build-up and abrasion resistance may be further enhanced.

The coupling ratio of the conjugated diene rubber is preferably at least 5 % by weight, more preferably at least 30 % by weight, even more preferably at least 60 % by weight, and is preferably at most 95 % by weight, more preferably at most 90 % by weight, even more preferably at most 85 % by weight.

When the coupling ratio is too low, then the mechanical strength, the abrasion resistance and the reduced heat build-up of the conjugated diene rubber may be insufficient; but in the case where the coupling ratio is too high and when a filler is incorporated into the conjugated diene rubber, then the dispersibility of the filler may be poor and results in a rubber composition which gives a crosslinked rubber product with insufficient abrasion resistance.

The coupling ratio means the weight fraction of the polymer molecule having a molecular weight higher by at least two times than the peak top molecular weight of the polymer with an active terminal before reacted with a silicon compound having a halogen atom and/or an alkoxy group with the total number of the halogen atom and/or the alkoxy group of at least 5, relative to the total amount of the finally obtained conjugated diene rubber; and in this case, the molecular weight may be determined by gel permeation chromatography as calculated in terms of the molecular weight of polystyrene.

For the conjugated diene rubber used according to the invention, a specific silicon compound having a halogen atom and/or an alkoxy group with the total number of the halogen atom and/or the alkoxy group of at least 5 is used as the coupling agent, whereby the number of the polymer chains bonding to one coupling agent (branching degree) can be increased as compared with that in conventional cases where an alkoxysilane coupling agent such as tetramethoxysilane or tetraethoxysilane, or a halogen-containing coupling agent such as tin tetrachloride or silicon tetrachloride is used. Accordingly, the conjugated diene rubber used according to the invention could be excellent in mechanical strength, abrasion resistance and reduced heat build-up.

The number of the polymer chains bonding to one coupling agent varies depending on the molecular weight of the polymer with an active terminal that is reacted with the coupling agent; and as its index, usable is a ratio (hereinafter this value is referred to as "branching number") of the peak top molecular weight ($Mp\beta$) of the coupled polymer in the conjugated diene rubber to the peak top molecular weight ($Mp\alpha$) of the polymer with an active terminal before reacted with a silicon compound having a halogen atom and/or an alkoxy group with the total number of the halogen atom and/or the alkoxy group of at least 5.

The inventors' investigations made with polymers with an active terminal having a different molecular weight have clarified that the branching number of the conjugated diene rubber used according to the invention is high, satisfying the relation of the following formula:

$$(Mp\beta/Mp\alpha) \geq 1.8 \times 10^{-12} \times (Mp\alpha - 1,200,000)^2 + 2$$

Even when the coefficient of $(Mp\alpha - 1,200,000)^2$ in the above formula is $2.0 \times 10^{-12}$, the branching number of the conjugated diene rubber used according to the invention may be still high, satisfying the relation.

The conjugated diene rubber can be utilized as rubber products such as tires, hoses, window frames, belts, soles, rubber vibration insulators, automobile parts and damping rubbers; resin-reinforcing rubbers such as those for high-impact polystyrene or ABS resin; and the like. In particular, since the conjugated diene rubber is excellent in mechanical strength, abrasion resistance and reduced heat build-up, it is especially favorably used for constituting rubber compositions for tires.

The rubber composition used according to the invention contains the above-mentioned conjugated diene rubber. The rubber composition may contain any other rubber than the conjugated diene rubber used according to the invention. The other rubber than the conjugated diene rubber used according to the invention includes, for example, natural rubber, polyisoprene rubber, epoxidized natural rubber, epoxidized styrene-butadiene copolymer rubber, emulsion-polymerized styrene-butadiene copolymer rubber, solution-polymerized styrene-butadiene copolymer rubber, polybutadiene rubber, styrene-isoprene copolymer rubber, butadiene-isoprene copolymer rubber, styrene-isoprene-butadiene copolymer rubber, and the like. Above all, preferably used are natural rubber, polyisoprene rubber, polybutadiene rubber and styrene-butadiene copolymer rubber. One or more of these rubbers may be used either singly or as combined.

The proportion of the conjugated diene rubber used according to the invention to the total amount of the rubber component is preferably at least 10 % by weight, more preferably within a range of from 20 to 95 % by weight, even more preferably within a range of from 30 to 90 % by weight. When the proportion is too low, then the balance among the mechanical strength, the abrasion resistance and the reduced heat build-up of the rubber composition may be bad.

Preferably, the rubber composition used according to the invention contains a filler.

The compounded amount of the filler is preferably from 5 to 150 parts by weight relative to 100 parts by weight of the rubber component, more preferably from 40 to 120 parts by weight.

Typical examples of the filler include silica and carbon black. When silica is incorporated in the conjugated diene rubber used according to the invention to produce a rubber composition, the invention may express a more noticeable effect.

Silica usable as the filler includes dry-process white carbon, wet-process white carbon, colloidal silica, precipitated silica, and the like. Of those, preferred is wet-process white carbon mainly composed of hydrous silicic acid. The nitrogen adsorption specific surface area of silica (measured by the BET method according to ASTM D3037-81) is preferably from 50 to 400 $m^2$/g, more preferably from 100 to 220 $m^2$/g. Within the range, the abrasion resistance and the reduced heat build-up of the rubber composition may be better.

In the case where silica is incorporated with the rubber composition, and when a silane coupling agent is further incorporated therein, then the reduced heat build-up and the abrasion resistance of the rubber composition may be improved more.

The silane coupling agent includes, for example, vinyltriethoxysilane, $\beta$-(3,4-epoxycyclohexyl)ethyltrimethoxysilane, N-($\beta$-aminoethyl)-$\gamma$-aminopropyltrimethoxysilane, 3-octathio-1-propyl-triethoxysilane, bis(3-(triethoxysilyl)propyl) disulfide, bis(3-(triethoxysilyl)propyl) tetrasulfide, $\gamma$-trimethoxysilylpropyldimethylthiocarbamyl tetrasulfide, $\gamma$-trimethoxysilylpropylbenzothiazyl tetrasulfide, and the like. Above all, preferred are those having at most 4 sulfur atoms in one molecule from the viewpoint of evading scorching during kneading.

The amount of the silane coupling agent to be incorporated is preferably from 0.1 to 30 parts by weight relative to 100 parts by weight of silica, more preferably from 1 to 15 parts by weight.

Carbon black usable as the filler includes, for example, furnace black, acetylene black, thermal black, channel black, graphite, graphite fibers, fullerenes, and the like. Of those, preferred is furnace black, and its specific examples include SAF, ISAF, ISAF-HS, ISAF-LS, IISAF-HS, HAF, HAF-HS, HAF-LS, FEF, and the like.

The nitrogen adsorption specific surface area ($N_2S_A$) of carbon black is preferably from 5 to 200 $m^2$/g, more preferably from 80 to 130 $m^2$/g; the dibutyl phthalate (DBP) adsorption thereof is preferably from 5 to 300 ml/100 g, more preferably from 80 to 160 ml/100 g. Within the range, the mechanical strength and the abrasion resistance of a rubber crosslinked product obtained from the rubber composition may be better.

The ratio by weight of carbon black to silica (carbon black/silica) is preferably from 0/100 to 500/100, more preferably from 2/100 to 100/100, even more preferably from 5/100 to 65/100.

In addition to the above-mentioned components, additives may be incorporated in the rubber composition used according to the invention in their necessary amount in any ordinary manner. The additives include a crosslinking agent, a crosslinking promoter, a crosslinking activator, an antioxidant, an activator, a process oil, a plasticizer, a lubricant, a filler, a tackifier, aluminum hydroxide, and the like.

The crosslinking agent includes, for example, sulfur, sulfur halides, organic peroxides, quinone dioximes, organic polyamine compounds, methylol group-having alkylphenol resins, and the like. Above all, sulfur is preferably used. The compounded amount of the crosslinking agent to be incorporated is preferably from 0.1 to 15 parts by weight relative to 100 parts by weight of the entire rubber component, more preferably from 0.5 to 5 parts by weight.

The crosslinking promoter includes, for example, sulfenamide crosslinking promoters such as N-cyclohexyl-2-benzothiazylsulfenamide, N-t-butyl-2-benzothiazolesulfenamide, N-oxyethylene-2-benzothiazolesulfenamide, N-oxyethylene-2-benzothiazolesulfenamide and N,N'-diisopropyl-2-benzothiazolesulfenamide; guanidine crosslinking promoters such as diphenylguanidine, diorthotolylguanidine and orthotolylbiguanidine; thiourea-based crosslinking promoters; thiazole crosslinking promoters; thiuram crosslinking promoters; dithiocarbamic acid crosslinking promoters; xanthate crosslinking promoters; and the like. Above all, especially preferred are those containing a sulfenamide crosslinking promoter.

One or more these crosslinking promoters may be used either singly or as combined.

The amount of the crosslinking promoter to be incorporated is preferably from 0.1 to 15 parts by weight relative to 100 parts by weight of the entire rubber component, more preferably from 0.5 to 5 parts by weight.

As the crosslinking activator, usable are higher fatty acids such as stearic acid, as well as zinc oxide, and the like. The amount of the crosslinking activator to be incorporated may be suitably selected. The amount of higher fatty acid is preferably from 0.05 to 15 parts by weight relative to 100 parts by weight of the entire rubber component, more preferably from 0. 5 to 5 parts by weight. The amount of zinc oxide is preferably from 0.05 to 10 parts by weight relative to 100 parts by weight of all rubber, more preferably from 0.5 to 3 parts by weight.

The process oil usable herein may be the same as the extender oil for the conjugated diene rubber mentioned in the above. The other additives include activators such as diethylene glycol, polyethylene glycol and silicone oil; fillers such as calcium carbonate, talc and clay; tackifiers such as a petroleum resin and a coumarone resin; wax; and the like.

For obtaining the rubber composition, the constitutive ingredients may be kneaded in an ordinary manner. For example, the additives other than a crosslinking agent and a crosslinking promoter are kneaded with the rubber component, and then a crosslinking agent and a crosslinking promoter are mixed with the resulting blend to give a rubber composition. The kneading temperature for the additives other than a crosslinking agent and a crosslinking promoter with the rubber component is preferably from 80 to 200°C, more preferably from 120 to 180°C; and the kneading time is preferably from 30 seconds to 30 minutes. The kneaded blend may be mixed with a crosslinking agent and a crosslinking promoter generally after the kneaded blend is cooled to 100°C or lower, preferably to 80°C or lower.

The method of crosslinking and shaping the rubber composition is not specifically limited, and it may be selected depending on the shape and the size of the crosslinked product. A rubber composition having compounded a crosslinking agent therewith may be charged in a mold and heated to be shaped and crosslinked at the same time; or a rubber composition having compounded a crosslinking agent therewith may be shaped first and thereafter heated and crosslinked. The crosslinking temperature is preferably from 120 to 200°C, more preferably from 140 to 180°C; and the crosslinking time may be generally from 1 to 120 minutes or so.

The rubber composition is favorably used as a rubber composition for tires.
The tire of the invention comprises the rubber composition for tires.

The rubber composition for tires of the invention is usable, for example, for various tire parts such as treads, carcasses, side walls and beads in various tires such as all-season tires, high-performance tires and studless tires; and as it is especially excellent in reduced heat build-up, it is especially favorably used as treads of fuel-efficient tires.

EXAMPLES

The invention is described more concretely with reference to the following Examples and Comparative Examples. In these Examples, part and % are all by mass, unless otherwise specifically indicated.

The properties were evaluated according to the following methods.

[Molecular Weight of Polymer (peak top molecular weight, weight-average molecular weight, molecular weight distribution, coupling ratio; branching number)]

Determined by gel permeation chromatography as calculated in terms of the molecular weight of polystyrene. Concretely, samples were analyzed under the condition mentioned below.
Device for measurement: High-performance liquid chromatograph (Tosoh's trade name, "HLC-8020").
Column: Two columns of Tosoh's trade name, "GMH-HR-H" connected in series.
Detector: Differential refractometer (Tosoh's trade name, "RI-8020").
Eluent: Tetrahydrofuran.
Column temperature: 40°C.

(Microstructure of Polymer]

Determined by $^1$H-NMR.

[Breaking strength, and Stress at 300 % elongation]

According to JIS K6251, samples shaped in dumbbell No. 3 were analyzed. The properties are expressed as an index based on the standard sample having an index of 100. Samples having a larger index are excellent in mechanical strength.

[Abrasion resistance]

Measured with a Lambourn abrasion resistance test machine, according to JIS K6264. The property is expressed as an index based on the standard sample having an index of 100. Samples having a larger index are excellent in abrasion resistance.

[Reduced heat build-up]

Using a viscoelastometer (Rheometrics' trade name, "ARES"), tan$\delta$ of each sample was measured, as 2.5 % twisted at 60°C and at 10 Hz. The property is expressed as an index based on the standard sample having an index of 100. Samples having a smaller index are excellent in reduced heat build-up.

[Example A1]

4,000 g of cyclohexane, 158 g of styrene, 409 g of 1,3-butadiene and 5.5 mmoles of tetramethylethylenediamine were fed into an autoclave equipped with a stirrer, and n-butyllithium was added thereto in an amount necessary for neutralizing the impurities not participating in polymerization, and further 6.1 mmoles of n-butyllithium to be used for polymerization was added, and the polymerization was started at 40°C. 10 minutes after the start of the polymerization, a mixture of 42 g of styrene and 378 g of 1,3-butadiene was continuously added over 60 minutes. The highest temperature during the polymerization was 65°C. After the addition was completed, the polymerization was further continued for 20 minutes, and thereafter 13 g of 1, 3-butadiene was added, and the polymerization was further continued for 10 minutes. The thus-obtained polymerization solution was sampled to prepare a small amount of its sample, and this was analyzed for the remaining monomer concentration by gas chromatography and for the molecular weight of the polymer. The remaining monomer concentration was 1,200 ppm. As a coupling agent, 0.81 mmole of 1,2-bis(trichlorosilyl)ethane (TCSE) as a 15 % cyclohexane solution was added to it, and reacted at 63°C for 15 minutes, and thereafter as a polymerization terminator, methanol in an amount corresponding to 2 molar times the amount of n-butyllithium used for the polymerization was added, thereby giving a polymerization solution containing a conjugated diene rubber. As an antioxidant, 2,4-bis[(octylthio)methyl]-o-cresol (Ciba Specialty Chemicals' trade name, "Irganox 1520") was added to the polymerization solution in an amount of 0.1 part relative to 100 parts of the rubber component, then the polymerization solvent was removed by steam stripping, and the residue was dried in vacuo at 60°C for 24 hours to give a solid conjugated diene rubber RA1. The conjugated diene rubber RA1 was analyzed for the polymer microstructure and the molecular weight thereof. The test data are shown in Table A1.

(Example A2]

4,000 g of cyclohexane, 300 g of styrene, 300 g of 1,3-butadiene and 2.4 mmoles of tetramethylethylenediamine were fed into an autoclave equipped with a stirrer, and n-butyllithium was added thereto in an amount necessary for neutralizing the impurities not participating in polymerization, and further 2.8 mmoles of n-butyllithium to be used for polymerization was added to it, and the polymerization was started at 45°C. 20 minutes after the start of the polymerization, a mixture of 80 g of styrene and 310 g of 1, 3-butadiene was continuously added over 60 minutes. The highest temperature during the polymerization was 65°C. After the addition was completed, the polymerization was further continued for 40 minutes, and thereafter 10 g of 1, 3-butadiene was added, and the polymerization was further continued for 10 minutes. The thus-obtained polymerization solution was sampled to prepare a small amount of its sample, and this was analyzed for the remaining monomer concentration by gas chromatography and for the molecular weight of the polymer. The remaining monomer concentration was 3,100 ppm. As a coupling agent, 0.38 mmole of 1,2-bis(trichlorosilyl)ethane (TCSE) as a 15 % cyclohexane solution was added to it, and reacted at 63°C for 30 minutes, and thereafter as a polymerization terminator, methanol in an amount corresponding to 2 molar times the amount of n-butyllithium used for the polymerization was added, thereby giving a polymerization solution containing a conjugated diene rubber. 0.15 part of an antioxidant, 2,4-bis[(octylthio)methyl]-o-cresol (Ciba Specialty Chemicals' trade name, "Irganox 1520") and 37.5 parts of process oil (British Petroleum's trade name "Enerthene 1849A), each relative to 100 parts of the rubber component, were added to the polymerization solution; then the polymerization solvent was removed by steam stripping, and the residue was dried in vacuo at 60°C for 24 hours to give a solid conjugated diene rubber RA2. Its test data are shown in Table A1.

[Example A3]

4,000 g of cyclohexane, 30 g of styrene, 370 g of 1,3-butadiene and 21 mmoles of tetramethylethylenediamine were fed into an autoclave equipped with a stirrer, and n-butyllithium was added thereto in an amount necessary for neutralizing the impurities not participating in polymerization, and further 14 mmoles of n-butyllithium to be used for polymerization was added to it, and the polymerization was started at 40°C. 10 minutes after the start of the polymerization, a mixture of 20 g of styrene and 370 g of 1,3-butadiene was continuously added over 60 minutes. The highest temperature during the polymerization was 60°C. After the addition was completed, the polymerization was further continued for 20 minutes, and thereafter 10 g of 1,3-butadiene was added, and the polymerization was further continued for 10 minutes. The thus-obtained polymerization solution was sampled to prepare a small amount of its sample, and this was analyzed for the remaining monomer concentration by gas chromatography and for the molecular weight of the polymer. The remaining monomer concentration was 600 ppm. As a coupling agent, 1.9 mmoles of 1,2-bis(trichlorosilyl)ethane (TCSE) as a 15 % cyclohexane solution was added to it, and reacted at 63°C for 15 minutes, and thereafter as a polymerization terminator, methanol in an amount corresponding to 2 molar times the amount of n-butyllithium used for the polymerization was added, thereby giving a polymerization solution containing a conjugated diene rubber. 0.1 part, relative to 100 parts of the rubber component, of an antioxidant, 2,4-bis[(octylthio)methyl]-o-cresol (Ciba Specialty Chemicals' trade name, "Irganox 1520") was added to the polymerization solution; then the polymerization solvent was removed by steam stripping, and the residue was dried in vacuo at 60°C for 24 hours to give a solid conjugated diene rubber RA3. Its test data are shown in Table A1.

[Table 1]

| | Example | | |
|---|---|---|---|
| | A1 | A2 | A3 |
| Conjugated Diene Rubber | RA1 | RA2 | RA3 |
| Coupling Agent | TCSE | TCSE | TCSE |
| Polymer with an active terminal | | | |
| Peak top molecular weight $(Mp\alpha)$ $(\times 10^4)$ | 25 | 45 | 11 |
| Molecular weight distribution (Mw/Mn) | 1.05 | 1.09 | 1.04 |
| $Mp\beta/Mp\alpha$ value | 3.6 | 3.0 | 4.1 |
| Conjugated Diene Rubber after coupling | | | |
| Bound styrene content (%) | 20 | 38 | 5 |
| Bound 1,3-Butadiene content (%) | 80 | 62 | 95 |
| Vinyl bond content in butadiene unit segment (%) | 55 | 40 | 72 |
| Weight-average molecular weight $(\times 10^4)$ | 84 | 113 | 43 |
| Molecular weight distribution (Mw/Mn) | 1.53 | 1.69 | 1.62 |
| Peak top molecular weight $(Mp\beta)$ $(\times 10^4)$ | 102 | 144 | 52 |
| Coupling ratio (%) | 78 | 75 | 80 |
| Branching number $(Mp\beta/Mp\alpha)$ | 4.1 | 3.2 | 4.8 |
| Remarks | - | Extender oil incorporated | - |

| | Comparative Example | | | |
|---|---|---|---|---|
| | A1 | A2 | A3 | A4 |
| Conjugated Diene Rubber | RAC1 | RAC2 | RAC3 | RAC4 |
| Coupling Agent | SiCl$_4$ | SiCl$_4$ | SiCl$_4$ | SiCl$_4$ |
| Polymer with an active terminal | | | | |
| Peak top molecular weight $(Mp\alpha)$ $(\times 10^4)$ | 25 | 43 | 44 | 11 |
| Molecular weight distribution (Mw/Mn) | 1.05 | 1.09 | 1.09 | 1.04 |
| $Mp\beta/Mp\alpha$ value | 3.6 | 3.0 | 3.0 | 4.1 |
| Conjugated Diene Rubber after coupling | | | | |
| Bound styrene content (%) | 20 | 38 | 38 | 5 |
| Bound 1,3-Butadiene content (%) | 80 | 62 | 62 | 95 |
| Vinyl bond content in butadiene unit segment (%) | 55 | 40 | 40 | 72 |
| Weight-average molecular weight $(\times 10^4)$ | 69 | 97 | 75 | 33 |
| Molecular weight distribution (Mw/Mn) | 1.43 | 1.52 | 1.71 | 1.36 |
| Peak top molecular weight $(Mp\beta)$ $(\times 10^4)$ | 83 | 123 | 114 | 40 |
| Coupling ratio (%) | 78 | 74 | 53 | 80 |
| Branching number $(Mp\beta/Mp\alpha)$ | 3.3 | 2.8 | 2.6 | 3.6 |
| Remarks | - | Extender oil incorporated | Extender oil incorporated | - |

[Comparative Example A1]

A conjugated diene rubber RAC1 was produced in the same manner as in Example A1, for which, however, 1.2 mmoles of silicon tetrachloride (SiCl$_4$) were used as the coupling agent in place of 1,2-bis(trichlorosilyl)ethane (TCSE). Various test data are shown in Table A1.

[Comparative Example A2]

A conjugated diene rubber RAC2 was produced in the same manner as in Example A2, for which, however, 0.57 mmole of silicon tetrachloride (SiCl$_4$) was used as the coupling agent in place of 1,2-bis(trichlorosilyl)ethane (TCSE). Various test data are shown in Table A1.

[Comparative Example A3]

A conjugated diene rubber RAC3 was produced in the same manner as in Comparative Example A2, for which, however, the polymerization was continued for 120 minutes after addition of 10 g of 1, 3-butadiene. The remaining monomer concentration in the polymerization solution during addition of the coupling agent was 20 ppm. Various test data are shown in Table A1.

[Comparative Example A4]

A conjugated diene rubber RAC4 was produced in the same manner as in Example A3, for which, however, 2.9 mmoles of silicon tetrachloride (SiCl$_4$) were used as the coupling agent in place of 1,2-bis(trichlorosilyl)ethane (TCSE). Various test data are shown in Table A1.

[Example A4]

100 parts of the conjugated diene rubber (RA1) produced in Example A1 was masticated for 30 seconds in a Brabender mixer having a capacity of 250 ml, and then 40 parts of silica (Rhodia's trade name, "Zeosil 1165MP") and 4.8 parts of a silane coupling agent, bis(3-(triethoxysilyl)propyl)tetrasulfide (Degussa's trade name, "Si69") were added to it, and kneaded for 1.5 minutes with a starting temperature of 80°C. Next, 10 parts of process oil (British Petroleum's trade name, "Enerthene 1849A"), 20 parts of silica (Rhodia's trade name, "Zeosil 1165MP"), 2 parts of zinc oxide, 2 parts of stearic acid and 2 parts of an antioxidant, N-phenyl-N'-(1,3-dimethylbutyl)-p-phenylenediamine (Ouchi Shinko's trade name "Nocrac 6C") were added to it, and further kneaded for 2.5 minutes, and the rubber blend was taken out of the mixer. At the end of the kneading, the temperature of the rubber blend was 150°C. The rubber blend was cooled to room temperature, and again kneaded in a Brabender mixer for 2 minutes with a starting temperature of 110°C, and then the rubber blend was taken out of the mixer.

Next, in an open roll at 50°C, the obtained rubber blend was kneaded with 1.6 parts of sulfur and a crosslinking promoter (mixture of 1.4 parts of N-cyclohexyl-2-benzothiazylsulfenamide and 1.4 parts of diphenylguanidine), and thereafter the sheet-like rubber composition SA1 was taken out. The rubber composition SA1 was press-crosslinked at 160°C for 30 minutes to prepare a test piece, and the test piece was tested for the breaking strength, the stress at 300 % elongation, the abrasion resistance and the reduced heat build-up. The results are shown in Table A2. The evaluation data are expressed as an index based on the rubber composition SAC1 of Comparative Example A5 as the standard sample (having an index of 100).

[Comparative Example A5]

A sheet-like rubber composition SAC1 was produced in the same manner as in Example A4 and its test pieces were tested, for which, however, the conjugated diene rubber (RAC1) produced in Comparative Example RA1 was used in place of the conjugated diene rubber RA1. The data are shown in Table A2.

[Table A2]

|  | Example A4 | Comparative Example A5 |
|---|---|---|
| Rubber Composition for Tire | SA1 | SAC1 |
| Conjugated Diene Rubber | RA1 | RAC1 |

(continued)

|  | Example A4 | Comparative Example A5 |
|---|---|---|
| Breaking strength (index) | 110 | 100 |
| Stress at 300 % elongation (index) | 107 | 100 |
| Abrasion resistance (index) | 104 | 100 |
| Reduced heat build-up (index) | 97 | 100 |

[Example A5]

110 parts of the conjugated diene rubber (RA2) produced in Example A2 and 20 parts of a commercial polybutadiene rubber (Nipol BR1220, by Nippon Zeon) were masticated for 30 seconds in a Brabender mixer having a capacity of 250 ml, and then 50 parts of silica (Rhodia's trade name, "Zeosil 1165MP") and 4 parts of a silane coupling agent (Si75, bis(3-(triethoxysilyl)propyl)disulfide, by Degussa) were added to it, and kneaded for 1.5 minutes with a starting temperature of 80°C. Next, 10 parts of process oil (British Petroleum's trade name, "Enerthene 1899A"), 30 parts of carbon black (Tokai Carbon's trade name, "Seast 7HM"), 3 parts of zinc oxide, 2 parts of stearic acid, 2 parts of an antioxidant, N-phenyl-N'-(1,3-dimethylbutyl)-p-phenylenediamine (Ouchi Shinko's trade name "Nocrac 6C") and 1 part of paraffin wax were added to it, and further kneaded for 2.5 minutes, and the rubber blend was taken out of the mixer. At the end of the kneading, the temperature of the rubber blend was 155°C. The rubber blend was cooled to room temperature, and again kneaded in a Brabender mixer for 2 minutes with a starting temperature of 80°C, and then the rubber blend was taken out of the mixer.

Next, in an open roll at 50°C, the obtained rubber blend was kneaded with 1. 7 parts of sulfur and a crosslinking promoter (mixture of 1.6 parts of N-cyclohexyl-2-benzothiazylsulfenamide and 1.2 parts of diphenylguanidine), and thereafter the sheet-like rubber composition SA2 was taken out. The rubber composition SA2 was press-crosslinked at 160°C for 30 minutes to prepare a test piece, and the test piece was tested for the breaking strength, the stress at 300 % elongation, the abrasion resistance and the reduced heat build-up. The results are shown in Table A3. The evaluation data are expressed as an index based on the rubber composition SAC2 of Comparative Example A6 as the standard sample (having an index of 100).

[Comparative Example A6]

A sheet-like rubber composition SAC2 was produced in the same manner as in Example A5 and its test pieces were tested, for which, however, the conjugated diene rubber RAC2 produced in Comparative Example A2 was used in place of the conjugated diene rubber RA2. The data are shown in Table A3.

[Comparative Example A7]

A sheet-like rubber composition SAC3 was produced in the same manner as in Example A5 and its test pieces were tested, for which, however, the conjugated diene rubber RAC3 produced in Comparative Example A3 was used in place of the conjugated diene rubber RA2. The data are shown in Table A3.
[Table A3]

|  | Example A5 | Comparative Example A6 | Comparative Example A7 |
|---|---|---|---|
| Rubber Composition for Tire | SA2 | SAC2 | SAC3 |
| Conjugated Diene Rubber | RA2 | RAC2 | RAC3 |
| Breaking strength (index) | 108 | 100 | 93 |
| Stress at 300 % elongation (index) | 108 | 100 | 98 |
| Abrasion resistance (index) | 104 | 100 | 97 |
| Reduced heat build-up (index) | 95 | 100 | 107 |

As is obvious from Table A1, the conjugated diene rubbers of the invention (Examples A1 to A3) produced using the specific silicon halide compound defined in the invention as the coupling agent had a larger branching number than that of those (Comparative Examples A1 to A4) produced using silicon tetrachloride (SiCl$_4$) as the coupling agent. Also as obvious from Table A2 and Table A3, the rubber compositions produced using the above-mentioned conjugated diene rubber of the invention were more excellent in mechanical strength, abrasion resistance and reduced heat build-up than the rubber compositions produced using the conjugated diene rubber that had been prepared using silicon tetrachloride as the coupling agent (comparison between Example A4 and Comparative Example A5, and comparison between Example A5 and Comparative Examples A6 to A7).

[Example B1]

4,000 g of cyclohexane, 162 g of styrene, 438 g of 1,3-butadiene and 13.7 mmoles of tetramethylethylenediamine were fed into an autoclave equipped with a stirrer, and n-butyllithium was added thereto in an amount necessary for neutralizing the impurities not participating in polymerization, and further 3.8 mmoles of n-butyllithium to be used for polymerization was added to it, and the polymerization was started at 40°C. 15 minutes after the start of the polymerization, a mixture of 162 g of styrene and 438 g of 1, 3-butadiene was continuously added over 50 minutes. The highest temperature during the polymerization was 65°C. After the addition was completed, the polymerization was further continued for 20 minutes, and thereafter 10 g of 1,3-butadiene was added, and the polymerization was further continued for 10 minutes. The thus-obtained polymerization solution was sampled to prepare a small amount of its sample, and this was analyzed for the remaining monomer concentration by gas chromatography and for the molecular weight of the polymer. The remaining monomer concentration was 1,200 ppm.

As a coupling agent, 0.77 mmole of bis(trimethoxysilyl)ethane (this may be hereinafter referred to as "BTMSE") (mixture of 80 to 90 % of 1,2-bis(trimethoxysilyl)ethane and 10 to 20 % of 1,1-bis(trimethoxysilyl)ethane) as a 15 % cyclohexane solution was added to it, and reacted for 60 minutes, and thereafter as a polymerization terminator, 7.6 mmoles of methanol was added, thereby giving a polymerization solution containing a conjugated diene rubber. The temperature at the start of the reaction was 63°C.

Relative to 100 parts of the rubber component, 0.15 part of an antioxidant, 2,4-bis[(octylthio)methyl]-o-cresol (Ciba Specialty Chemicals' trade name, "Irganox 1520") and 37.5 parts of process oil (Nippon Oil's trade name, "Fukkol Elamic 30") were added to the polymerization solution, then the polymerization solvent was removed by steam stripping, and the residue was dried in vacuo at 60°C for 24 hours to give a solid conjugated diene rubber RB1.

The conjugated diene rubber RB1 was analyzed for its various properties such as the polymer microstructure and the molecular weight thereof. The data are shown in Table B1.

[Table B1]

| | Example | | | | Comparative Example | |
|---|---|---|---|---|---|---|
| | B1 | 82 | B3 | B4 | B1 | B2 |
| Conjugated Diene Rubber | RB1 | RB2 | RB3 | RB4 | ABC1 | RBC2 |
| Coupling Agent | BTMSE | BTESPA | BTESE | BTMSE | TMOS | TMOS |
| Polymer with an active terminal | | | | | | |
| Peak top molecular weight (Mp$\alpha$) ($\times 10^4$) | 37 | 39 | 38 | 33 | 45 | 42 |
| Molecular weight distribution (Mw/Mn) | 1.08 | 1.09 | 1.09 | 1.07 | 1.10 | 1.09 |
| Conjugated Diene Rubber after coupling | | | | | | |
| Bound styrene content (%) | 25 | 25 | 25 | 39 | 25 | 39 |
| Bound 1,3-Butadiene content (%) | 75 | 75 | 75 | 61 | 75 | 61 |
| Vinyl bond content in butadiene unit segment (%) | 63 | 63 | 63 | 40 | 63 | 40 |
| Weight-average molecular weight ($\times 10^4$) | 85 | 70 | 71 | 72 | 75 | 72 |
| Molecular weight distribution (Mw/Mn) | 1.49 | 1.62 | 1.52 | 1.64 | 1.47 | 1.61 |

(continued)

| Conjugated Diene Rubber after coupling | | | | | | |
|---|---|---|---|---|---|---|
| Peak top molecular weight (Mpβ) ($\times 10^4$) | 107 | 101 | 100 | 105 | 107 | 106 |
| Coupling ratio (%) | 71 | 59 | 61 | 60 | 53 | 57 |
| Branching number (Mpβ/Mpα) | 2.9 | 2.6 | 2.6 | 3.2 | 2.4 | 2.5 |
| * Footnotes to Table B1<br>BTMSE: bis(trimethoxysilyl)ethane. Number of methoxy groups = 6.<br>BTESPA: bis(3-triethoxysilylpropyl)methylamine. Number of ethoxy groups = 6.<br>BTESE: bis(3-triethoxysilylpropyl)ethane. Number of ethoxy groups = 6.<br>TMOS: tetramethoxysilane. Number of methoxy groups = 4. | | | | | | |

[Example 82]

A conjugated diene rubber RB2 was produced in the same manner as in Example B1, for which, however, 3.6 mmoles of n-butyllithium was used for the polymerization and 0.72 mmole of bis (3-triethoxysilylpropyl)methylamine (herein this may be referred to as "BTESPA") was used as the coupling agent. Various properties of the conjugated diene rubber RB2 are shown in Table B1.

[Example B3]

A conjugated diene rubber RB3 was produced in the same manner as in Example B2, for which, however, 0.72 mmole of bis(3-triethoxysilylpropyl)ethane (herein this may be referred to as "BTESE") was used as the coupling agent. Various properties of the conjugated diene rubber RB3 are shown in Table B1.

[Comparative Example B1]

A conjugated diene rubber RBC1 was produced in the same manner as in Example B1, for which, however, 3.2 mmoles of n-butyllithium was used for the polymerization and 0.64 mmole of tetramethoxysilane (herein this may be referred to as "TMOS") was used as the coupling agent. Various properties of the conjugated diene rubber RBC1 are shown in Table B1.

[Example B4]

4,000 g of cyclohexane, 300 g of styrene, 300 g of 1,3-butadiene and 4.5 mmoles of tetramethylethylenediamine were fed into an autoclave equipped with a stirrer, and n-butyllithium was added thereto in an amount necessary for neutralizing the impurities not participating in polymerization, and further 4.7 mmoles of n-butyllithium to be used for polymerization was added to it, and the polymerization was started at 50°C. 15 minutes after the start of the polymerization, a mixture of 90 g of styrene and 300 g of 1, 3-butadiene was continuously added over 50 minutes. The highest temperature during the polymerization was 70°C. After the addition was completed, the polymerization was further continued for 15 minutes, and thereafter 10 g of 1, 3-butadiene was added, and the polymerization was further continued for 10 minutes. The thus-obtained polymerization solution was sampled to prepare a small amount of its sample, and this was analyzed for the remaining monomer concentration by gas chromatography and for the molecular weight of the polymer. The remaining monomer concentration was 1,050 ppm.
As a coupling agent, 0.73 mmole of bis(trimethoxysilyl)ethane (BTMSE) as a 15 % cyclohexane solution was added to the polymerization solution and reacted for 30 minutes, and then as a terminal modifier, 2.0 mmoles of N-phenyl-2-pyrrolidone was added, and reacted for 30 minutes. As a polymerization terminator, 9.4 mmoles of methanol was added, thereby giving a polymerization solution containing a conjugated diene rubber. The temperature at the start of the reaction was 68°C.
0.15 part of an antioxidant, 2,4-bi[(octylthio)methyl]-o-cresol (Ciba Specialty Chemicals' trade name, "Irganox 1520") and 37.5 parts of process oil (Nippon Oil's trade name, "Fukkol Elamic 30"), each relative to 100 parts of the rubber component, were added to the polymerization solution, then the polymerization solvent was removed by steam stripping, and the residue was dried in vacuo at 60°C for 24 hours to give a solid conjugated diene rubber RB4.
The conjugated diene rubber RB4 was analyzed for its various properties such as the polymer microstructure and the molecular weight thereof. The data are shown in Table B1.

[Comparative Example B2]

A conjugated diene rubber RBC2 was produced in the same manner as in Example B4, for which, however, 3.8 mmoles of tetramethylethylenediamine was used, 3.5 mmoles of n-butyllithium was used for the polymerization, 0.93 mmole of tetramethoxysilane (TMOS) was used as the coupling agent, and the terminal modifier was not used. Various properties of the conjugated diene rubber RBC2 are shown in Table B1.

[Example B5]

68. 75 parts of the conjugated diene rubber (RB1) produced in Example B1, 30 parts of natural rubber and 20 parts of polybutadiene rubber (Nippon Zeon's trade name, "Nipol BR1220") were masticated for 30 seconds in a Brabender mixer having a capacity of 250 ml, and then 50 parts of silica (Rhodia's trade name, "Zeosil 1165MP") and 6 parts of a silane coupling agent (bis(3-(triethoxysilyl)propyl)disulfide, Degussa's trade name "Si75") were added to it, and kneaded for 1. 5 minutes with a starting temperature of 80°C. Next, 22 parts of process oil (Nippon Oil's trade name, Fukkol Elamic 30"), 25 parts of silica (Rhodia's trade name, "Zeosil 1165MP"), 5 parts of carbon black (Tokai Carbon's trade name, "Seast 7HM"), 2 parts of zinc oxide, 2 parts of stearic acid, 2 parts of an antioxidant, N-phenyl-N'-(1,3-dimethylbutyl)-p-phenylenediamine (Ouchi Shinko's trade name "Nocrac 6C") and 1 part of paraffin wax were added to it, and further kneaded for 2.5 minutes, and the rubber blend was taken out of the mixer. At the end of the kneading, the temperature of the rubber blend was 150°C. The rubber blend was cooled to room temperature, and again kneaded in a Brabender mixer for 3 minutes with a starting temperature of 80°C, and then the rubber blend was taken out of the mixer.

Next, in an open roll at 50°C, the obtained rubber blend was kneaded with 1.7 parts of sulfur and a crosslinking promoter (mixture of 1.8 parts of N-cyclohexyl-2-benzothiazylsulfenamide and 1.5 parts of diphenylguanidine), and thereafter the sheet-like rubber composition SB1 was taken out.

The rubber composition was press-crosslinked at 160°C for 30 minutes to prepare a test piece, and the test piece was tested for the breaking strength, the stress at 300 % elongation, the abrasion resistance and the reduced heat build-up. The results are shown in Table B2. The evaluation data are expressed as an index based on the rubber composition SBC1 of Comparative Example B3 as the standard sample (the index of the characteristic data of the rubber composition SBC1 of Comparative Example B3 is set to 100).

[Table B2]

|  | Example B5 | Example B6 | Example B7 | Comparative Example B3 |
|---|---|---|---|---|
| Rubber Composition for Tire | SB1 | SB2 | SB3 | SBC1 |
| Conjugated Diene Rubber | RB1 | RB2 | RB3 | RBC1 |
| Breaking strength (index) | 112 | 95 | 102 | 100 |
| Stress at 300 % elongation (index) | 107 | 110 | 110 | 100 |
| Abrasion resistance (index) | 105 | 106 | 106 | 100 |
| Reduced heat build-up (index) | 88 | 84 | 93 | 100 |

[Examples B6 to B7 and Comparative Example B3]

Sheet-like rubber compositions SB2, SB3 and SBC1 were produced in the same manner as in Example B5 and their properties were evaluated, for which, however, the conjugated. diene rubbers RB2, RB3 and RBC1 produced in Examples B2, B3 and Comparative Example B1, respectively, were used in place of the conjugated diene rubber RB1, respectively. The data are shown in Table B2.

[Example B8]

110 parts of the conjugated diene rubber (RB4) produced in Example B4 and 20 parts of a commercial polybutadiene rubber (Nippon Zeon's trade name, "Nipol BR1220") were masticated for 30 seconds in a Brabender mixer having a capacity of 250 ml, and then 50 parts of silica (Rhodia's trade name, "Zeosil 1165MP") and 4 parts of a silane coupling agent (bis(3-(triethoxysilyl)propyl)tetrasulfide, Degussa's trade name, "Si69") were added to it, and kneaded for 1.5 minutes with a starting temperature of 80°C. Next, 22 parts of process oil (Nippon Oil's trade name, Fukkol Elamic 30"), 30 parts of carbon black (Tokai Carbon's trade name, "Seast 7HM"), 3 parts of zinc oxide, 2 parts of stearic acid, 2 parts of an antioxidant, N-phenyl-N'-(1,3-dimethylbutyl)-p-phenylenediamine (Ouchi Shinko's trade name "Nocrac 6C") and 1 part of paraffin wax were added to it, and further kneaded for 2.5 minutes, and the rubber blend was taken out of the mixer. At the end of the kneading, the temperature of the rubber blend was 155°C. The rubber blend was cooled to room temperature, and again kneaded in a Brabender mixer for 3 minutes with a starting temperature of 80°C, and then the rubber blend was taken out of the mixer.

Next, in an open roll at 50°C, the obtained rubber blend was kneaded with 1.7 parts of sulfur and a crosslinking promoter (mixture of 1.8 parts of N-cyclohexyl-2-benzothiazylsulfenamide and 1.0 part of diphenylguanidine), and thereafter the sheet-like rubber composition SB4 was taken out.

The rubber composition SB4 was press-crosslinked at 160°C for 30 minutes to prepare a test piece, and the test piece was tested for the breaking strength, the stress at 300 % elongation, the abrasion resistance and the reduced heat build-up. The results are shown in Table B3. The evaluation data are expressed as an index based on the rubber composition SBC2 of Comparative Example B4 as the standard sample (the index of the characteristic data of the rubber composition of Comparative Example B4 is set to 100).

[Table B3]

|  | Example B8 | Comparative Example B4 |
|---|---|---|
| Rubber Composition for Tire | SB4 | SBC2 |
| Conjugated Diene Rubber | RB4 | RBC2 |
| Breaking strength (index) | 108 | 100 |
| Stress at 300 % elongation (index) | 111 | 100 |
| Abrasion resistance (index) | 104 | 100 |
| Reduced heat build-up (index) | 86 | 100 |

[Comparative Example B4]

A sheet-like rubber composition SBC2 was produced in the same manner as in Example B8 and its properties were evaluated, for which, however, the conjugated diene rubber RBC2 produced in Comparative Example B2 was used in place of the conjugated diene rubber RB4. The data are shown in Table B3.

As is obvious from Table B1, the conjugated diene rubbers used according to the invention (Examples B1 to B4) produced using the specific alkoxysilane compound defined in the invention as the coupling agent had a larger branching number than that of those (Comparative Examples B1 to B2) produced using tetramethoxysilane as the coupling agent.

Also as obvious from Table B2 and Table B3, the rubber compositions produced using the above-mentioned conjugated diene rubber were more excellent in mechanical strength, abrasion resistance and reduced heat build-up than the rubber compositions produced using the conjugated diene rubber that had been prepared using tetramethoxysilane as the coupling agent.

**Claims**

1.   The use of a conjugated diene rubber having a weight-average molecular weight of from 10,000 to 3,000,000 for manufacturing a tire or a sole, wherein the conjugated diene rubber is produced by a method **characterized by** adding a compound represented by the following general formula (I) as a coupling agent to a solution that comprises a polymer with an active terminal obtained through polymerization of a monomer mixture comprising a conjugated diene monomer or a conjugated diene monomer and an aromatic vinyl monomer in an inert solvent using an organic active metal as an initiator, and causing the compound to react with the polymer with an active terminal:

$$[Formula 1] \quad SiX^1_pR^1_{3-p}\text{-}(A^1\text{-}A^3\text{-}A^2)_n\text{-}SiX^2_qR^2_{3-q} \qquad (I)$$

{in general formula (I), $X^1$ and $X^2$ each represent a halogen atom or an alkoxy group having from 1 to 20 carbon atoms; in the compound of general formula (I), the total of the number of the halogen atoms and the number of the alkoxy groups having from 1 to 20 carbon atoms is at least 5; $R^1$ and $R^2$ each represent a monovalent hydrocarbon group having from 1 to 20 carbon atoms; $A^1$ and $A^2$ each represent a single bond or a divalent hydrocarbon having from 1 to 20 carbon atoms; $A^3$ represent a group represented by a general formula (II), (III) or (IV); plural $X^1$, $X^2$, $R^1$, $R^2$, $A^1$, $A^2$ or $A^3$, if any, may be each the same or different; p and q each indicate an integer of from 0 to 3; n indicates an integer of from 0 to 20; and when n is 2 or more, the plurality of repetitive units represented by $(A^1$-$A^3$-$A^2)$ may differ from each other);

$$-(SiX^3_rR^3_{2-r})_m-\qquad (II)$$

(in general formula (II), $X^3$ represents a halogen atom or an alkoxy group having from 1 to 20 carbon atoms; $R^3$ represents a monovalent hydrocarbon group having from 1 to 20 carbon atoms; plural $x^3$ or $R^3$, if any, may be each the same or different; r indicates an integer of from 0 to 2; m indicates an integer of from 0 to 20; when m is 2 or more, the plurality of repetitive units represented by $(SiX^3_rR^3_{2-r})$ may differ from each other; in the case where $A^3$ is represented by general formula (II), (p+nxmxr+q) is an integer of at least 5};

$$-NR^4-\qquad (III)$$

{in general formula (III), $R^4$ represents a hydrogen atom or a monovalent hydrocarbon group having from 1 to 20 carbon atoms; in the case where $A^3$ is represented by general formula (III), (p+q) is 5 or 6};

$$-N(-A^5-SiX^5_5R^5_{3-5})-\qquad (IV)$$

{in general formula (IV), $A^5$ represents a single bond or a divalent hydrocarbon group having from 1 to 20 carbon atoms; $X^5$ represents a halogen atom or an alkoxy group having from 1 to 20 carbon atoms; $R^5$ represents a monovalent hydrocarbon group having from 1 to 20 carbon atoms; plural $X^5$ or $R^5$, if any, may be each the same or different; s indicates an integer of from 0 to 3; in the case where $A^3$ is represented by general formula (IV), (p+nxs+q) is an integer of at least 5).

2. The use as claimed in claim 1, wherein $X^1$ and $X^2$ in general formula (I) are each simultaneously a halogen atom or an alkoxy group having from 1 to 20 carbon atoms; (1) in the case where $X^1$ and $X^2$ are both a halogen atom, the compound of general formula (I) has at least 5 halogen atoms; $A^3$ is a group represented by general formula (II); and $X^3$ in general formula (II) is a halogen atom, and (2) in the case where $X^1$ and $X^2$ are both an alkoxy group having from 1 to 20 carbon atoms, the compound of general formula (I) has at least 5 alkoxy groups having from 1 to 20 carbon atoms; $A^3$ is a group represented by general formula (II), (III) or (IV); $X^3$ in general formula (II) is an alkoxy group having from 1 to 20 carbon atoms; and $X^5$ in general formula (IV) is an alkoxy group having from 1 to 20 carbon atoms.

3. The use as claimed in claim 1 or 2, wherein the coupling agent is a silicon halide compound represented by the following general formula (V):

$$SiX^1_pR^1_{3-p}-A^6-SiX^2_3\qquad (V)$$

{in general formula (V), $X^1$ and $X^2$ each represent a halogen atom, and plural $X^1$ or $X^2$, if any, may be each different halogen atoms; $R^1$ represents a monovalent hydrocarbon group having from 1 to 20 carbon atoms; $A^6$ represents a single bond, a polymethylene group having from 1 to 20 carbon atoms $((CH_2)_k$ (k indicates an integer of from 1 to 20)), an arylene group or a cycloalkylene group; p is 2 or 3).

4. The use as claimed in claim 1 or 2, wherein the coupling agent is an alkoxysilane compound of the following general formula (VI), (VII) or (VIII):

$$SiX^1_pR^1_{3-p}-A^6-SiX^2_3\qquad (VI)$$

{in general formula (VI), $X^1$ and $X^2$ each represent an alkoxy group having from 1 to 20 carbon atoms, and plural $X^1$ or $X^2$, if any, may be each different alkoxy groups; $R^1$ represents a monovalent hydrocarbon group having from 1 to 20 carbon atoms; $A^6$ represents a single bond, a polymethylene group having from 1 to 20 carbon atoms $((CH_2)_k$ (k indicates an integer of from 1 to 20)), an arylene group or a cycloalkylene group; p is 2 or 3};

$$SiX^1_pR^1_{3-p}-A^7-NR^4-A^8-SiX^2_3\qquad (VII)$$

{in general formula (VII), $X^1$ and $X^2$ each represent an alkoxy group having from 1 to 20 carbon atoms, and plural $X^1$ or $X^2$, if any, may be each different alkoxy groups; $R^1$ represents a monovalent hydrocarbon group having from 1 to 20 carbon atoms; $R^4$ represents a hydrogen atom or a monovalent hydrocarbon group having from 1 to 20 carbon atoms; $A^7$ and $A^8$ each represent a single bond, a polymethylene group having from 1 to 20 carbon atoms $((CH_2)_k$ (k indicates an integer of from 1 to 20)), an arylene group or a cycloalkylene group; in $A^7$ and $A^8$, the number of the methylene groups may be the same or different; p is 2 or 3};

$$SiX^1{}_pR^1{}_{3-p}\text{-}A^9\text{-}N\ (\text{-}A^{10}\text{-}SiX^5{}_sR^5{}_{3-s})\text{-}A^{11}\text{-}SiX^2{}_3 \qquad\qquad (VIII)$$

(in general 1 formula (VIII), $X^1$, $X^2$ and $X^5$ each represent an alkoxy group having from 1 to 20 carbon atoms, and plural $X^1$, $X^2$ or $X^5$, if any, may be each different alkoxy groups; $R^1$ and $R^5$ each represent a monovalent hydrocarbon group having from 1 to 20 carbon atoms; $A^9$, $A^{10}$ and $A^{11}$ each represent a single bond, a polymethylene group having from 1 to 20 carbon atoms $((CH_2)_k$ (k indicates an integer of from 1 to 20)), an arylene group or a cycloalkylene group; in $A^9$, $A^{10}$ and $A^{11}$, the number of the methylene groups may be the same or different; p and s each indicate an integer of from 0 to 3, and (p+s) is an integer of from 2 to 6}.

5. The use as claimed in any one of claims 1 to 4, wherein the vinyl bond content in the conjugated diene monomer unit segment in the conjugated diene rubber is at least 5 % by weight.

6. The use as claimed in any one of claims 1 to 5, wherein the polymer with an active terminal has a peak top molecular weight of from 2, 000 to 1,200,000.

7. The use as claimed in any one of claims 1 to 6, wherein the coupling agent is caused to react under the condition where the solution containing the polymer having the active terminal contains at least 100 ppm of the monomer.

8. The use as claimed in any one of claims 1 to 7, wherein a polar compound is added to the inert solvent in polymerization of the monomer mixture.

9. The use as claimed in any one of claims 1 to 8, wherein the conjugated diene rubber comprises an extender oil.

10. The use of a rubber composition comprising a rubber component which comprises at least 10% by weight of the conjugated diene rubber as defined in any one of claims 1 to 9 for manufacturing a tire or a sole.

11. The use as claimed in claim 10, wherein the rubber composition comprises a filler in an amount of from 5 to 150 parts by weight relative to 100 parts by weight of the rubber component.

12. A tire or a sole made of the conjugated diene rubber as defined in any one of claims 1 to 9 or made of the rubber composition as defined in claim 10 or 11.

**Patentansprüche**

1. Verwendung eines konjugierten Dienkautschuks, der ein gewichtsmittleres Molekulargewicht von 10.000 bis 3.000.000 hat, zur Herstellung eines Reifens oder einer Sohle, wobei der konjugierte Dienkautschuk hergestellt ist durch ein Verfahren, das **gekennzeichnet ist durch** Zugeben einer Verbindung, die **durch** die folgende allgemeine Formel (I) dargestellt ist, als ein Haftvermittler zu einer Lösung, die ein Polymer mit einem aktiven Ende umfasst, erhalten **durch** Polymerisation einer Monomermischung, die ein konjugiertes Dienmonomer oder ein konjugiertes Dienmonomer und ein aromatisches Vinylmonomer umfasst, in einem inerten Lösemittel und unter Verwendung eines organischen aktiven Metalls als ein Initiator, und Bewirken, dass die Verbindung mit dem Polymer mit einem aktiven Ende reagiert:

$$[\text{Formel 1}]\ \mathbf{SiX^1{}_pR^1{}_{3-p}\text{-} (A^1\text{-}A^3\text{-}A^2)_n\text{-}SiX^2{}_qR^2{}_{3-q}} \qquad\qquad (I)$$

{in der allgemeinen Formel (I) stellen $X^1$ und $X^2$ jeweils ein Halogenatom oder eine Alkoxygruppe mit von 1 bis 20 Kohlenstoffatomen dar; in der Verbindung der allgemeinen Formel (I) ist die Gesamtheit der Anzahl der Halogenatome und der Anzahl der Alkoxygruppen mit von 1 bis 20 Kohlenstoffatomen mindestens 5; $R^1$ und $R^2$ stellen jeweils eine monovalente Kohlenwasserstoffgruppe mit von 1 bis 20 Kohlenstoffatomen dar; $A^1$ und $A^2$ stellen jeweils eine Einfachbindung oder einen divalenten Kohlenwasserstoff mit von 1 bis 20 Kohlenstoffatomen dar; $A^3$ stellt eine

Gruppe, dargestellt **durch** eine allgemeine Formel (II), (III) oder (IV) dar; mehrere $X^1$, $X^2$, $R^1$, $R^2$, $A^1$, $A^2$ oder $A^3$, wenn vorhanden, können jeweils gleich oder verschieden sein; p und q bezeichnen jeweils eine ganze Zahl von 0 bis 3; n bezeichnet eine ganze Zahl von 0 bis 20; und wenn n 2 oder mehr ist, kann sich die Mehrheit der Wiederholungseinheiten, die **durch** ($A^1$-$A^3$-$A^2$) dargestellt sind, von einander unterscheiden};

$$-(SiX^3_rR^3_{2-r})_m- \qquad (II)$$

{In der allgemeinen Formel (II) stellt $X^2$ ein Halogenatom oder eine Alkoxygruppe mit von 1 bis 20 Kohlenstoffatomen dar; $R^3$ stellt eine monovalente Kohlenwasserstoffgruppe mit von 1 bis 20 Kohlenstoffatomen dar; mehrere $X^3$ oder $R^3$, wenn vorhanden, können jeweils gleich oder verschieden sein; r bezeichnet eine ganze Zahl von 0 bis 2; m bezeichnet eine ganze Zahl von 0 bis 20; wenn m 2 oder mehr ist, kann sich die Mehrheit der Wiederholungseinheiten, die **durch** ($SiX^3_rR^3_{2-r}$) dargestellt sind, voneinander unterscheiden; in dem Fall, wo $A^3$ **durch** die allgemeine Formel (II) dargestellt ist, ist (p+nxmxr+q) eine ganze Zahl von mindestens 5};

$$-NR^4- \qquad (III)$$

{In der allgemeinen Formel (III) stellt $R^4$ ein Wasserstoffatom oder eine monovalente. Kohlenwasserstoffgruppe mit von 1 bis 20 Kohlenstoffatomen dar; in dem Fall, wo $A^3$ **durch** die allgemeine Formel (III) dargestellt ist, ist (p+q) 5 oder 6};

$$-N(-A^5-SiX^5_sR^5_{3-5})- \qquad (IV)$$

{In der allgemeinen Formel (IV) stellt $A^5$ eine Einfachbindung oder eine divalente Kohlenwasserstoffgruppe mit von 1 bis 20 Kohlenstoffatomen dar; $X^5$ stellt ein Hallogenatom oder eine Alkoxygruppe mit von 1 bis 20 Kohlenstoffatomen dar; $R^5$ stellt eine monovalente Kohlenwasserstoffgruppe mit von 1 bis 20 Kohlenstoffatomen dar; mehrere $X^5$ oder $R^5$, wenn vorhanden, können jeweils gleich oder verschieden sein; s bezeichnet eine ganze Zahl von 0 bis 3; in dem Fall, wo $A^3$ **durch** die allgemeine Formel (IV) dargestellt ist, ist (p+nxs+q) eine ganze Zahl von mindestens 5}.

2. Verwendung wie in Anspruch 1 beansprucht, wobei $X^1$ und $X^2$ in der allgemeinen Formel (I) jeweils gleichzeitig ein Halogenatom oder eine Alkoxygruppe mit von 1 bis 20 Kohlenstoffatomen sind; (1) in dem Fall, wo $X^1$ und $X^2$ beide ein Halogenatom sind, hat die Verbindung der allgemeinen Formel (I) mindestens 5 Halogenatome; $A^3$ ist eine Gruppe, die durch die allgemeine Formel (II) dargestellt ist; und $X^3$ in der allgemeinen Formel (II) ist ein Halogenatom, und (2) in dem Fall, wo $X^1$ und $X^2$ beide eine Alkoxygruppe mit von 1 bis 20 Kohlenstoffatomen sind, hat die Verbindung der allgemeinen Formel (I) mindestens 5 Alkoxygruppen mit von 1 bis 20 Kohlenstoffatomen; $A^3$ ist eine Gruppe, die durch die allgemeine Formel (II), (III) oder (IV) dargestellt ist; $X^3$ in der allgemeinen Formel (II) ist eine Alkoxygruppe mit von 1 bis 20 Kohlenstoffatomen; und $X^5$ in der allgemeinen Formel (IV) ist eine Alkoxygruppe mit von 1 bis 20 Kohlenstoffatomen.

3. Verwendung wie in Anspruch 1 oder 2 beansprucht, wobei der Haftvermittler eine Siliziumhalogenidverbindung, dargestellt durch die folgende allgemeine Formel (V) ist:

$$SiX^1_pR^1_{3-p}-A^6-SiX^2_3 \qquad (V)$$

{**In der allgem**einen Formel (V) stellen $X^1$ und $X^2$ jeweils ein Halogenatom dar, und mehrere $X^1$ oder $X^2$, wenn vorhanden, können jeweils verschiedene Halogenatome sein; $R^1$ stellt eine monovalente Kohlenwasserstoffgruppe mit von 1 bis 20 Kohlenstoffatomen dar; $A^6$ stellt eine Einfachbindung, eine Polymethylengruppe mit von 1 bis 20 Kohlenstoffatomen ($(CH_2)_k$ (k bezeichnet eine ganze Zahl von 1 bis 20)), eine Arylengruppe oder eine Cykloalkylengruppe dar; p ist 2 oder 3}.

4. Verwendung wie in Anspruch 1 oder 2 beansprucht, wobei der Haftvermittler eine Alkoxysilanverbindung der folgenden allgemeinen Formel (VI), (VII) oder (VIII) ist:

$$SiX^1_pR^1_{3-p}-A^6-SiX^2_3 \qquad (VI)$$

{In der allgemeinen Formel (VI) stellen $X^1$ und $X^2$ jeweils eine Alkoxygruppe mit von 1 bis 20 Kohlenstoffatomen dar, und mehrere $X^1$ oder $X^2$, wenn vorhanden, können jeweils verschiedene Alkoxygruppen sein; $R^1$ stellt eine monovalente Kohlenwasserstoffgruppe mit von 1 bis 20 Kohlenstoffatomen dar; $A^6$ stellt eine Einfachbindung, eine Polymethylengruppe mit von 1 bis 20 Kohlenstoffatomen ($(CH_2)_k$ (k bezeichnet eine ganze Zahl von 1 bis 20)), eine Arylengruppe oder eine Cykloalkylengruppe dar; p ist 2 oder 3};

$$SiX^1{}_pR^1{}_{3-p}\text{-}A^1\text{-}NR^4\text{-}A^8\text{-}SiX^2{}_3 \qquad (VII)$$

{In der allgemeinen Formel (VII) stellen $X^1$ und $X^2$ jeweils eine Alkoxygruppe mit von 1 bis 20 Kohlenstoffatomen dar, und mehrere $X^1$ oder $X^2$, wenn vorhanden, können jeweils verschiedene Alkoxygruppen sein; $R^1$ stellt eine monovalente Kohlenwasserstoffgruppe mit von 1 bis 20 Kohlenstoffatomen dar; $R^4$ stellt ein Wasserstoffatom oder eine monovalente Kohlenwasserstoffgruppe mit von 1 bis 20 Kohlenstoffatomen dar; $A^7$ und $A^8$ stellen jeweils eine Einfachbindung, eine Polymethylengruppe mit von 1 bis 20 Kohlenstoffatomen ($(CH_2)_k$ (k bezeichnet eine ganze Zahl von 1 bis 20)), eine Arylengruppe oder eine Cycloalkylengruppe dar; in $A^7$ und $A^8$ kann die Anzahl der Methylengruppen gleich oder verschieden sein; p ist 2 oder 3};

$$SiX^1{}_pR^1{}_{3-p}\text{-}A^9\text{-}N(\text{-}A^{10}\text{-}SiX^5{}_sR^5{}_{1-s})\text{-}A^{11}\text{-}SiX^2{}_3 \qquad (VIII)$$

{In der allgemeinen Formel (VIII) stellen $X^1$, $X^2$ und $X^5$ jeweils eine Alkoxygruppe mit von 1 bis 20 Kohlenstoffatomen dar, und mehrere $X^1$, $X^2$ oder $X^5$, wenn vorhanden, können jeweils verschiedene Alkoxygruppen sein; $R^1$ und $R^5$ stellen jeweils eine monovalente Kohlenwasserstoffgruppe mit von 1 bis 20 Kohlenstoffatomen dar; $A^9$, $A^{10}$ und $A^{11}$ stellen jeweils eine Einfachbindung, eine Polymethylengruppe mit von 1 bis 20 Kohlenstoffatomen ($(CH_2)_k$ (k bezeichnet eine ganze Zahl von 1 bis 20)), eine Arylengruppe oder eine Cycloalkylengruppe dar; in $A^9$, $A^{10}$ und $A^{11}$ kann die Anzahl der Methylengruppen gleich oder verschieden sein; p und s bezeichnen jeweils eine ganze Zahl von 0 bis 3, und (p+s) ist eine ganze Zahl von 2 bis 6}.

**5.** Verwendung wie in einem der Ansprüche 1 bis 4 beansprucht, wobei der Vinylbindungsgehalt in dem konjugierten Dien-Monomereinheiten-Segment in dem konjugierten Dienkautschuk mindestens 5 Gewichtsprozent ist.

**6.** Verwendung wie in einem der Ansprüche 1 bis 5 beansprucht, wobei das Polymer mit einem aktiven Ende ein Spitzenmolekulargewicht von 2.000 bis 1.200.000 hat.

**7.** Verwendung wie in einem der Ansprüche 1 bis 6 beansprucht, wobei bewirkt wird, dass der Haftvermittler unter der Bedingung, wo die Lösung, die das Polymer mit dem aktiven Ende enthält, mindestens 100 ppm des Monomers enthält, reagiert.

**8.** Verwendung wie in einem der Ansprüche 1 bis 7 beansprucht, wobei eine polare Verbindung zu dem inerten Lösemittel bei der Polymerisation der Monomermischung zugegeben wird.

**9.** Verwendung wie in einem der Ansprüche 1 bis 8 beansprucht, wobei der konjugierte Dienkautschuk ein Extenderöl umfasst.

**10.** Verwendung einer Kautschukzusammensetzung, umfassend eine Kautschukkomponente, die mindestens 10 Gewichtsprozent des konjugierten Dienkautschuks, wie in einem der Ansprüche 1 bis 9 definiert, umfasst, für die Herstellung eines Reifens oder einer Sohle.

**11.** Verwendung wie in Anspruch 10 beansprucht, wobei die Kautschukzusammensetzung einen Füllstoff in einer Menge von 5 bis 150 Gewichtsteilen, relativ zu 100 Gewichtsteilen der Kautschukkomponente, umfasst.

**12.** Reifen oder Sohle, der/die aus dem konjugierten Dienkautschuk, wie in einem der Ansprüche 1 bis 9 definiert, hergestellt ist, oder der/die aus der Kautschukzusammensetzung, wie in Anspruch 10 oder 11 definiert, hergestellt ist.

**Revendications**

**1.** Utilisation d'un caoutchouc de diène conjugué ayant une masse moléculaire moyenne en masse de 10 000 à 3 000 000 pour fabriquer un pneu ou une semelle, dans lequel le caoutchouc de diène conjugué est produit par un procédé **caractérisé par** l'addition d'un composé représenté par la formule générale (I) suivante en tant qu'agent de couplage à une solution qui comprend un polymère avec une terminaison active obtenue via la polymérisation d'un mélange de monomères comprenant un monomère de diène conjugué et un monomère vinylique aromatique dans un solvant inerte en utilisant un métal actif organique en tant qu'initiateur, et le fait d'amener le composé à réagir avec le polymère avec une terminaison active ;

[Formule I] $SiX^1_pR^1_{3-p}$- $(A^1-A^3-A^2)_n$-$SiX^2_qR^2_{3-q}$        (I)

(dans la formule générale (1), $X^1$ et $X^2$ représentent chacun un atome d'halogène ou un groupe alcoxy ayant de 1 à 20 atomes de carbone ; dans le composé de formule générale (I), le total du nombre des atomes d'halogène et du nombre des groupes alcoxy ayant de 1 à 20 atomes de carbone est d'au moins 5 ; $R^1$ et $R^2$ représentent chacun un groupe hydrocarbure monovalent ayant de 1 à 20 atomes de carbone ; $A^1$ et $A^2$ représentent chacun une liaison simple ou un hydrocarbure divalent ayant de 1 à 20 atomes de carbone ; $A^3$ représente un groupe représenté par une formule générale (II), (III) ou (IV) ; plusieurs $X^1$, $X^2$, $R^1$, $R^2$, $A^1$, $A^2$ ou $A^3$, le cas échéant, peuvent être chacun identiques ou différents ; p et q indiquent chacun un nombre entier de 0 à 3 ; n indique un nombre entier de 0 à 20 ; et lorsque n est égal à 2 ou plus, la pluralité de motifs répétitifs représentés par $(A^1-A^3-A^2)$ peuvent différer les uns des autres) :

$-(SiX^3_rR^3_{2-r})_m$-       (II)

(dans la formule générale (II), $X^3$ représente un atome d'halogène ou un groupe alcoxy ayant de 1 à 20 atomes de carbone ; $R^3$ représente un groupe hydrocarbure monovalent ayant de 1 à 20 atomes de carbone ; plusieurs $X^3$ ou $R^3$, le cas échéant, peuvent être chacun identiques ou différents ; r indique un nombre entier de 0 à 2 ; m indique un nombre entier de 0 à 20 ; lorsque m est égal à 2 ou plus, la pluralité de motifs répétitifs représentés par $(SiX^3_rR^3_{2-r})$ peuvent différer les uns des autres ; dans le cas où $A^3$ est représenté par la formule générale (II), $(p + n \times m \times r + q)$ est un nombre entier d'au moins 5) ;

$-NR^4-$       (III)

(dans la formule générale (III), $R^4$ représente un atome d'hydrogène ou un groupe hydrocarbure monovalent ayant de 1 à 20 atomes de carbone ; dans le cas où $A^3$ est représenté par la formule générale (III), $(p + q)$ est égal à 5 ou 6 ;

$-N(-A^5-SiX^5_sR^5_{3-s})-$       (IV)

(dans la formule générale (IV), $A^5$ représente une liaison simple ou un groupe hydrocarbure divalent ayant de 1 à 20 atomes de carbone ; $X^5$ représente un atome d'halogène ou un groupe alcoxy ayant de 1 à 20 atomes de carbone ; $R^5$ représente un groupe hydrocarbure monovalent ayant de 1 à 20 atomes de carbone ; plusieurs $X^5$ ou $R^5$, le cas échéant, peuvent être chacun identiques ou différents ; s indique un nombre entier de 0 à 3 ; dans le cas où $A^3$ est représenté par la formule générale (IV), $(p + n \times s + q)$ est un nombre entier d'au moins 5).

2. Utilisation selon la revendication 1, dans laquelle $X^1$ et $X^2$ dans la formule générale (I) sont chacun simultanément un atome d'halogène ou un groupe alcoxy ayant de 1 à 20 atomes de carbone ; (1) dans le cas où $X^1$ et $X^2$ sont tous deux un atome d'halogène, le composé de formule générale (I) a au moins 5 atomes d'halogène ; $A^3$ est un groupe représenté par la formule générale (II) ; et $X^3$ dans la formule générale (II) est un atome d'halogène, et (2) dans le cas où $X^1$ et $X^2$ sont tous deux un groupe alcoxy ayant de 1 à 20 atomes de carbone, le composé de formule générale (I) a au moins 5 groupes alcoxy ayant de 1 à 20 atomes de carbone ; $A^3$ est un groupe représenté par la formule générale (II), (III) ou (IV) ; $X^3$ dans la formule générale (II) est un groupe alcoxy ayant de 1 à 20 atomes de carbone ; et $X^5$ dans la formule générale (IV) est un groupe alcoxy ayant de 1 à 20 atomes de carbone.

3. Utilisation selon la revendication 1 ou 2, dans laquelle l'agent de couplage est un composé halogénure de silicium représenté par la formule générale suivante (V) :

$SiX^1_pR^1_{3-p}$-$A^6$-$SiX^2_3$       (V)

(dans la formule générale (V), $X^1$ et $X^2$ représentent chacun un atome d'halogène, et plusieurs $X^1$ et $X^2$, le cas échéant, peuvent être chacun des atomes d'halogène différents; R1 représente un groupe hydrocarbure monovalent ayant de 1 à 20 atomes de carbone ; $A^6$ représente une liaison simple, un groupe polyméthylène ayant de 1 à 20 atomes de carbone $((CH_2)_k$ (k indique un nombre entier de 1 à 20)), un groupe arylène ou un groupe cycloalkylène ; p est égal à 2 ou 3).

4. Utilisation selon la revendication 1 ou 2, dans laquelle l'agent de couplage est un composé alcoxysilane de formule générale (VI), (VII) ou (VIII) suivante :

$$SiX^1_pR^1_{3-p}\text{-}A^6\text{-}SiX^2_3 \qquad (VI)$$

(dans la formule générale (VI), $X^1$ et $X^2$ représentent chacun un groupe alcoxy ayant de 1 à 20 atomes de carbone, et plusieurs $X^1$ et $X^2$, le cas échéant, peuvent être chacun des groupes alcoxy différents ; $R^1$ représente un groupe hydrocarbure monovalent ayant de 1 à 20 atomes de carbone ; $A^6$ représente une liaison simple, un groupe polyméthylène ayant de 1 à 20 atomes de carbone ($(CH_2)_k$ (k indique un nombre entier de 1 à 20)), un groupe arylène ou un groupe cycloalkylène ; p est égal à 2 ou 3) ;

$$SiX^1_pR^1_{3-p}\text{-}A^7\text{-}NR^4\text{-}A^8\text{-}SiX^2_3 \qquad (VII)$$

(dans la formule générale (VII), $X^1$ et $X^2$ représentent chacun un groupe alcoxy ayant de 1 à 20 atomes de carbone, et plusieurs $X^1$ et $X^2$, le cas échéant, peuvent être chacun des groupes alcoxy différents ; $R^1$ représente un groupe hydrocarbure monovalent ayant de 1 à 20 atomes de carbone ; $R^4$ représente un atome d'hydrogène ou un groupe hydrocarbure monovalent ayant de 1 à 20 atomes de carbone ; $A^7$ et $A^8$ représentent chacun une liaison simple, un groupe polyméthylène ayant de 1 à 20 atomes de carbone ($(CH_2)_k$ (k indique un nombre entier de 1 à 20)), un groupe arylène ou un groupe cycloalkylène ; dans $A^7$ et $A^8$, le nombre des groupes méthylène peut être identique ou différent ; p est égal à 2 ou 3) ;

$$SiX^1_pR^1_{3-p}\text{-}A^9\text{-}N(\text{-}A^{10}\text{-}SiX^5_sR^5_{3-s})\text{-}A^{11}\text{-}SiX^2_3 \qquad (VIII)$$

(dans la formule générale (VIII), $X^1$, $X^2$ et $X^5$ représentent chacun un groupe alcoxy ayant 1 à 20 atomes de carbone, et plusieurs $X^1$, $X^2$ ou $X^5$, le cas échéant, peuvent être chacun des groupes alcoxy différents ; $R^1$ et $R^5$ représentent chacun un groupe hydrocarbure monovalent ayant de 1 à 20 atomes de carbone ; $A^9$, $A^{10}$ et $A^{11}$ représentent chacun une liaison simple, un groupe polyméthylène ayant de 1 à 20 atomes de carbone ($(CH^2)_k$ (k indique un nombre entier de 1 à 20)), un groupe arylène ou un groupe cycloalkylène ; dans $A^9$, $A^{10}$ et $A^{11}$, le nombre des groupes méthylène peut être identique ou différent ; p et s indiquent chacun un nombre entier de 0 à 3, et (p + s) est un nombre entier de 2 à 6).

5. Utilisation selon l'une quelconque des revendications 1 à 4, dans laquelle la teneur en liaison vinyle dans le segment de motif monomère de diène conjugué dans le caoutchouc de diène conjugué est d'au moins 5 % en poids.

6. Utilisation selon l'une quelconque des revendications 1 à 5, dans laquelle le polymère avec une terminaison active a une masse moléculaire supérieure maximale de 2 000 à 1 200 000.

7. Utilisation selon l'une quelconque des revendications 1 à 6, dans laquelle l'agent de couplage est amené à réagir à condition que la solution contenant le polymère ayant la terminaison active contienne au moins 100 ppm du monomère.

8. Utilisation selon l'une quelconque des revendications 1 à 7, dans laquelle un composé polaire et ajouté au solvant inerte en polymérisation du mélange de monomères.

9. Utilisation selon l'une quelconque des revendications 1 à 8, dans laquelle le caoutchouc de diène conjugué comprend une huile de dilution.

10. Utilisation d'une composition de caoutchouc comprenant un composant de caoutchouc qui comprend au moins 10 % en poids du caoutchouc de diène conjugué tel que défini dans l'une quelconque des revendications 1 à 9 afin de fabriquer un pneu ou une semelle.

11. Utilisation selon la revendication 10, dans laquelle la composition de caoutchouc comprend une charge dans une quantité de 5 à 150 parties en poids pour 100 parties en poids du composant de caoutchouc.

12. Pneu ou semelle constitué du caoutchouc de diène conjugué tel que défini dans l'une quelconque des revendications 1 à 9 ou constitué de la composition de caoutchouc telle que définie dans la revendication 10 ou 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57055912 A
- JP 2004107384 A
- JP 9039056 T
- JP 2001131229 A
- US 5777039 A
- EP 1221460 A2
- US 2003100683 A1
- US 5369175 A
- US 3840616 A
- EP 1457501 A1
- WO 03102053 A